# EUROPEAN PATENT APPLICATION

(11) **EP 4 398 620 A1**
(43) Date of publication of application: **10.07.2024**
(21) Application number: 22874716.8
(22) Date of filing: 20.09.2022
(51) Int. Cl.: H04W 16/22

(54) **COMMUNICATION METHOD AND APPARATUS FOR NETWORK ENERGY SAVING**

(30) Priority: 30.09.2021 CN 202111159088
(71) Applicant: Huawei Technologies Co., Ltd., Shenzhen, Guangdong 518129 (CN)
(72) Inventor: HUANG, Xietian, Shenzhen, Guangdong 518129 (CN); YAN, Wen, Shenzhen, Guangdong 518129 (CN); WANG, Yaoguang, Shenzhen, Guangdong 518129 (CN); SHI, Xiaoli, Shenzhen, Guangdong 518129 (CN)
(74) Representative: Pfenning, Meinig & Partner mbB
(86) International application number: PCT/CN2022/120040
(87) International publication number: WO 2023/051329

(57) **Abstract**

This application provides a communication method and apparatus for network energy saving. The method may be performed by a first device or a second device. The second device may be a requester device of energy saving analysis, and the first device may be an execution device of energy saving analysis. According to the method, the first device may receive, from the second device, first information including an energy saving target of a network, and send an energy saving analysis result corresponding to the energy saving target to the second device. The energy saving target may include at least one of energy consumption reduction and energy efficiency improvement. The method enables the energy saving analysis result to correspond to the energy saving target of the network, so that reliability of an energy saving analysis process and effectiveness of the analysis result can be improved.

## Description

### CROSS-REFERENCE TO RELATED APPLICATIONS

This application claims priority to Chinese Patent Application No. 202111159088.8, filed with the China National Intellectual Property Administration on September 30, 2021 and entitled "COMMUNICATION METHOD AND APPARATUS FOR NETWORK ENERGY SAVING", which is incorporated herein by reference in its entirety.

### TECHNICAL FIELD

This application relates to the field of mobile communication technologies, and in particular, to a communication method and apparatus for network energy saving.

### BACKGROUND

With comprehensive commercial use of 5G, various new services and new scenarios keep emerging. To meet rapid growth of data traffic brought by massive connections and meet 5G features such as high reliability, wide coverage, a low latency, and fast transmission, a quantity of 5G stations increases sharply. As a result, power consumption of an entire network increases exponentially.

For a 5G network energy saving (energy saving, ES) solution and an energy saving management service (energy saving management service, ES MnS), a core solution is to implement a station that assists an access network (access network, AN) in improving coverage, so that an AN device or a cell of an AN device enters an activated state or a deactivated state based on an actual network running status, to implement energy saving control. The actual network running status includes but is not limited to a network load status.

However, customers may have different energy saving targets in different scenarios, and different energy saving targets may correspond to different energy saving measures. As a result, an analysis report may not meet a requirement of a customer for an energy saving target. This affects effectiveness of the analysis report.

### SUMMARY

This application provides a communication method and apparatus for network energy saving, so that an energy saving analysis result meets an energy saving target of a network, and reliability of an energy saving analysis process and effectiveness of the analysis result are improved.

According to a first aspect, this application provides a communication method for network energy saving. The method may be performed by a first device. The first device may be an execution device of energy saving analysis. For example, the first device is a management data analytics service (management data analytics service, MDAS) producer. The following describes steps included in the first aspect and possible designs of the first aspect by using an example in which the first device is an MDAS producer.

The method may include the following steps: The MDAS producer may receive first information from a second device, where the first information includes an energy saving target of a network, and the energy saving target includes at least one of energy consumption reduction and energy efficiency improvement. The first device further sends an energy saving analysis result corresponding to the energy saving target to the second device. An example in which the second device is an MDAS consumer is used below for description. The MDAS consumer may be configured to manage a network that accepts energy saving analysis. The MDAS consumer may be configured to request the MDAS producer to provide an MDAS.

Based on this method, the MDAS producer may provide, for the MDAS consumer, the energy saving analysis result corresponding to the energy saving target of the network, so that the energy saving analysis result can meet a requirement of the energy saving target of the network, and reliability of an energy saving analysis process and effectiveness of the analysis result can be improved.

In a possible design, the first information sent by the MDAS consumer may further carry key performance index impact of the network, and the key performance index impact indicates an acceptable key index decreasing range.

Based on this design, the MDAS producer may receive the key performance index impact from the MDAS consumer, so that a requirement of the MDAS consumer for the acceptable key index decreasing range is considered in a process of determining the energy saving analysis result sent by the MDAS producer, thereby further improving reliability of the energy saving analysis process and effectiveness of the analysis result.

In a possible design, the MDAS producer may further determine a first recommendation based on the energy saving target and the key performance index impact, and determine second information based on the first recommendation, the energy saving target, and the key performance index impact. In this design, the energy saving analysis result may include the first recommendation for an energy saving issue of the network and the second information corresponding to the first recommendation, and the second information includes at least one of energy saving effect prediction information and a key performance index change range.

Based on this design, the energy saving effect prediction information may be used to predict energy saving effect corresponding to the first recommendation, and the key performance index change range may be used to predict a key performance index decrease corresponding to the first recommendation. When the energy saving analysis result includes at least one of the energy saving effect prediction information and the key performance index change range, integrity of the energy saving analysis result can be further improved, and the MDAS consumer is better assisted in determining an energy saving decision.

In a possible design, the MDAS producer may further receive third information from the MDAS consumer, and determine the first recommendation based on the energy saving target, the key performance index impact, and the third information. The third information indicates at least one of an energy saving analysis area, an energy saving analysis period, an energy saving analysis result report period, an energy saving RAT, and an energy saving analysis domain.

Based on this design, the MDAS producer may determine the energy saving analysis result based on at least one of the energy saving analysis area, the energy saving analysis period, the energy saving analysis result report period, the energy saving RAT, and the energy saving analysis domain, thereby further improving reliability and integrity of the energy saving analysis result, and better assisting the MDAS consumer in determining an energy saving decision.

In a possible design, the MDAS producer may further send the first recommendation, the energy saving target, and the key performance index impact to a third device, and receive the second information from the third device. The first recommendation, the energy saving target, and the key performance index impact are used to determine the second information.

Based on this design, the MDAS producer may obtain the second information from the third device, that is, another device other than the MDAS producer may determine the second information, to share processing load of the MDAS producer in a process of obtaining the energy saving analysis result, and improve energy saving analysis efficiency. The third device may be a simulator network element of the MDAS producer, for example, a digital twin of the MDAS producer.

In a possible design, the MDAS producer may further receive a first indication from the MDAS consumer, and the first indication indicates that the third device determines the second information.

Based on this design, the MDAS producer may obtain the second information from the third device based on the first indication of the MDAS consumer, so that the energy saving analysis process better meets an energy saving analysis requirement of the MDAS consumer.

In a possible design, the MDAS producer may further determine updated second information, and send the updated second information to the MDAS consumer.

Based on this design, the MDAS producer may update the second information, to update the energy saving analysis result in a timely manner. This further improves reliability of the energy saving analysis result.

In a possible design, the MDAS producer may receive the updated second information from the third device.

Based on this design, the MDAS producer may obtain the updated second information from the third device, that is, the third device may update the second information, so that the third device shares processing load of the MDAS producer in the energy saving analysis process.

In a possible design, the MDAS producer may further receive an energy saving issue condition from the MDAS consumer, where the energy saving issue condition may be used to determine whether an energy saving issue corresponding to the energy saving target exists; and the MDAS producer may further determine, based on the condition, whether the energy saving issue exists. In this application, the energy saving issue condition may also be referred to as a condition determining whether the energy saving issue corresponding to the energy saving target exists.

Based on this design, the MDAS producer may determine, based on the energy saving issue condition indicated by the MDAS consumer, whether the energy saving issue exists. The energy saving issue condition may be dynamically set or adjusted based on a requirement of the MDAS consumer, to improve effectiveness of the energy saving analysis result.

In a possible design, the MDAS producer may further send a first configuration to the MDAS consumer. The first configuration includes at least one of an energy saving target supported by the MDAS producer, a key performance index supported by the MDAS producer, a scenario supported by the MDAS producer, an energy saving RAT supported by the MDAS producer, an energy saving analysis domain supported by the MDAS producer, and an energy saving analysis level supported by the MDAS producer. The energy saving target supported by the MDAS producer may include the energy saving target of the network that is carried in the first information.

Based on this design, the MDAS producer may obtain the first configuration of the MDAS producer, to indicate an energy saving analysis capability supported by the MDAS producer. The first configuration may include at least one of the energy saving target, the key performance index, the scenario, the energy saving RAT, the energy saving analysis domain, and the energy saving RAT that are supported by the MDAS producer, so that the MDAS consumer may select, based on the energy saving analysis capability of the MDAS producer, an appropriate MDAS producer for energy saving analysis, to further improve reliability of the energy saving analysis result.

In a possible design, the MDAS producer may send the first configuration to the MDAS consumer through a fourth device. For example, the MDAS producer may send the first configuration to the fourth device, and the fourth device forwards the first configuration to the MDAS consumer. The fourth device may be a management function (management function, MnF), for example, an MnS discovery service producer. The first configuration may also be referred to as an energy saving analysis capability.

Based on this design, the MDAS producer may be managed through the fourth device. When the MDAS consumer needs an energy saving analysis service, the fourth device provides the MDAS consumer with a first configuration of an available MDAS producer, to improve management efficiency of the MDAS producer and efficiency of selecting the MDAS producer.

According to a second aspect, this application provides a communication method for network energy saving. The method may be performed by a second device. The second device may include an MDAS consumer. The following describes steps included in the second aspect and possible designs of the second aspect by using an example in which the second device is an MDAS consumer.

The method may include the following steps: The MDAS consumer may send first information to a first device, where the first information includes an energy saving target of a network, and the energy saving target includes at least one of energy consumption reduction and energy efficiency improvement. In addition, the MDAS consumer may further receive an energy saving analysis result corresponding to the energy saving target from the first device. The first device may be an MDAS producer. The following uses an example in which the second device is an MDAS consumer for description.

In a possible design, the first information sent by the MDAS consumer further includes key performance index impact of the network, to indicate an acceptable key index decreasing range.

In a possible design, the energy saving analysis result received by the MDAS consumer may carry a first recommendation for an energy saving issue of the network and second information corresponding to the first recommendation, and the second information may include at least one of energy saving effect prediction information and a key performance index change range.

In a possible design, the MDAS consumer may further send third information to the MDAS producer, and the third information and the first information may be used to determine the first recommendation for the energy saving issue of the network. The third information indicates at least one of an energy saving analysis area, an energy saving analysis period, an energy saving analysis result report period, an energy saving RAT, and an energy saving analysis domain.

In a possible design, the MDAS consumer may further send a first indication to the MDAS producer, to indicate that a third device determines the second information.

In a possible design, the MDAS consumer may further receive updated second information from the MDAS producer.

In a possible design, the MDAS consumer may further send an energy saving issue condition to the MDAS producer, and the energy saving issue condition may be used to determine whether an energy saving issue corresponding to the energy saving target exists.

In a possible design, the MDAS consumer may further receive a first configuration sent by the MDAS producer. The first configuration includes at least one of an energy saving target supported by the MDAS producer, a key performance index supported by the MDAS producer, a scenario supported by the MDAS producer, an energy saving RAT supported by the MDAS producer, an energy saving analysis domain supported by the MDAS producer, and an energy saving analysis level supported by the MDAS producer. The energy saving target supported by the MDAS producer may include the energy saving target of the network that is carried in the first information.

In a possible design, the MDAS consumer may further send a first request to a fourth device, where the first request is used to request the first configuration. The MDAS consumer may further receive the first configuration through the fourth device.

According to a third aspect, an embodiment of this application provides a communication method for network energy saving. The method may be performed by a third device. The third device may be a simulator node of the first device. For example, if the first device is an MDAS producer, the third device may be a simulator network element of the MDAS producer. The following describes steps included in the third aspect and possible designs of the third aspect by using an example in which the first device is an MDAS producer and the third device is a simulator network element of the MDAS producer.

The method may include the following steps: The simulator network element of the MDAS producer receives at least one of a first recommendation for an energy saving issue of a network, an energy saving target of the network, and key performance index impact of the network from the MDAS producer. The simulator network element may determine, based on the first recommendation, the energy saving target, and the key performance index impact, second information corresponding to the first recommendation, where the second information includes at least one of energy saving effect prediction information and a key performance index change range. The simulator network element may further send the second information to the MDAS producer.

In a possible design, the simulator network element may further send updated second information to the MDAS producer.

In a possible design, the simulator network element may further receive an updated first recommendation from the MDAS producer, and the third device may further determine the updated second information based on the updated first recommendation.

In a possible design, the simulator network element may further receive a second indication from the MDAS producer or a second device, where the second indication indicates a first energy saving operation performed by the second device in response to an energy saving analysis result. The second device may be an MDAS consumer. The simulator network element may further determine the updated second information based on the first energy saving operation.

According to a fourth aspect, an embodiment of this application provides a communication method for network energy saving. The method may be performed by a fourth device. The following describes steps included in the fourth aspect and possible designs of the fourth aspect by using an example in which the fourth device is an MnS discovery service producer.

The method may include the following steps: The MnS discovery service producer receives a first configuration from an MDAS producer, and sends the first configuration to an MDAS consumer. The first configuration includes at least one of the following information: an energy saving target supported by the MDAS producer, a key performance index supported by the MDAS producer, a scenario supported by the MDAS producer, an energy saving RAT supported by the MDAS producer, an energy saving analysis domain supported by the MDAS producer, and an energy saving analysis level supported by the MDAS producer. The energy saving target supported by the MDAS producer may include the energy saving target of the network that is carried in the first information.

In a possible design, the MnS discovery service producer may further receive a first request from the MDAS consumer, where the first request is used to request the first configuration.

According to a fifth aspect, an embodiment of this application provides a communication apparatus for network energy saving, including modules configured to perform the steps in the first aspect to the fourth aspect and any possible design of the first aspect to the fourth aspect.

For example, the communication apparatus may include a transceiver module and a processing module. The transceiver module may be configured to support the communication apparatus in performing communication in at least one of a wired manner and a wireless manner. The communication may include transmission or reception of a signal, information, signaling, data, a message, or the like. The processing module may be configured to support the communication apparatus in performing a processing action. The processing action includes but is not limited to generating content sent by the transceiver module, processing content received by the transceiver module, or performing processing actions in the first aspect to the fourth aspect and any possible design of the first aspect to the fourth aspect.

According to a sixth aspect, an embodiment of this application provides a communication apparatus for network energy saving, including at least one processing element and at least one storage element. The at least one storage element is configured to store a program and data, and the at least one processing element is configured to perform the method provided in the steps in the first aspect to the fourth aspect and any possible design of the first aspect to the fourth aspect.

According to a seventh aspect, an embodiment of this application provides a communication method for network energy saving. The communication method may be implemented by the first device in the first aspect and any possible design of the first aspect, and the MDAS consumer in the second aspect and any possible design of the second aspect. The following describes steps included in the communication method by using an example in which the first device is an MDAS producer and the second device is an MDAS consumer.

For example, the steps of the method include: The MDAS consumer sends first information to the MDAS producer, where the first information includes an energy saving target of a network, and the energy saving target includes at least one of energy consumption reduction and energy efficiency improvement. Correspondingly, the MDAS producer receives the first information. The MDAS producer may further send an energy saving analysis result corresponding to the energy saving target to the MDAS consumer. Correspondingly, the MDAS consumer receives the energy saving analysis result.

Optionally, the method may further include the method provided in any possible design of the first aspect. The method may further include the method provided in any possible design of the second aspect.

According to an eighth aspect, an embodiment of this application further provides a computer program. When the computer program is run on a computer, the computer is enabled to perform the method provided in the steps in the first aspect to the fourth aspect and any possible design of the first aspect to the fourth aspect.

According to a ninth aspect, an embodiment of this application further provides a computer-readable storage medium. The computer-readable storage medium stores a computer program, and when the computer program is executed by a computer, the computer is enabled to perform the method provided in the steps in the first aspect to the fourth aspect and any possible design of the first aspect to the fourth aspect.

According to a tenth aspect, an embodiment of this application further provides a chip. The chip is configured to read a computer program stored in a memory, to perform the method provided in the steps in the first aspect to the fourth aspect and any possible design of the first aspect to the fourth aspect.

According to an eleventh aspect, an embodiment of this application further provides a chip system. The chip system includes a processor, configured to support a computer apparatus in implementing the method provided in the steps in the first aspect to the fourth aspect and any possible design of the first aspect to the fourth aspect. In a possible design, the chip system further includes a memory, and the memory is configured to store a program and data that are necessary for the computer apparatus. The chip system may include a chip, or may include a chip and another discrete component.

According to a twelfth aspect, an embodiment of this application further provides a communication system. The communication system may include the first device provided in the first aspect and any possible design of the first aspect and the second device provided in the second aspect and any possible design of the second aspect. The first device may be implemented by using the apparatus provided in the fifth aspect or the sixth aspect. The second device may be implemented by using the apparatus provided in the fifth aspect or the sixth aspect.

For beneficial effects of the steps provided in the second aspect to the tenth aspect and any possible design of the second aspect to the tenth aspect, refer to beneficial effects of the steps provided in the first aspect and the possible designs of the first aspect. Details are not described again.

### BRIEF DESCRIPTION OF DRAWINGS

FIG. 1 is a schematic diagram of an architecture of a network energy saving analysis system according to this application;
FIG. 2 is a schematic diagram of an architecture of another network energy saving analysis system according to this application;
FIG. 3 is a schematic diagram of an architecture of another network energy saving analysis system according to this application;
FIG. 4 is a schematic diagram of a network architecture of a 5G network communication system according to this application;
FIG. 5 is a schematic flowchart of a communication method for network energy saving;
FIG. 6 is a schematic flowchart of a communication method for network energy saving according to this application;
FIG. 7 is a schematic diagram of a model association relationship of an energy saving analysis request according to this application;
FIG. 8 is a schematic diagram of a model association relationship of another energy saving analysis request according to this application;
FIG. 9 is a schematic diagram of a model association relationship of another energy saving analysis request according to this application;
FIG. 10 is a schematic diagram of a model association relationship of an energy saving analysis capability according to this application;
FIG. 11 is a schematic diagram of a model association relationship of another energy saving analysis capability according to this application;
FIG. 12 is a schematic diagram of a model association relationship of another energy saving analysis capability according to this application;
FIG. 13 is a schematic flowchart of another communication method for network energy saving according to this application;
FIG. 14 is a schematic flowchart of another communication method for network energy saving according to this application;
FIG. 15 is a schematic flowchart of another communication method for network energy saving according to this application;
FIG. 16 is a schematic flowchart of another communication method for network energy saving according to this application;
FIG. 17 is a schematic diagram of a structure of a communication apparatus for network energy saving according to this application; and
FIG. 18 is a schematic diagram of a structure of another communication apparatus for network energy saving according to this application.

### DESCRIPTION OF EMBODIMENTS

To make the objectives, technical solutions, and advantages of this application clearer, the following further describes this application in detail with reference to the accompanying drawings. Specific operation methods in method embodiments may also be applied to apparatus embodiments or system embodiments.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

The following explains terms in this application.
1. "Carry" may mean that a specific message is used to carry specific information or data, or may mean that a specific message includes specific information.
2. Management data analytics (management data analytics, MDA) and MDA management service (management service, MnS): The concept of MDA is defined in current mobile communication. Through an MDA process, data related to a network, a service event, and a status can be processed and analyzed, and an analysis report can be provided. The data includes, for example, performance measurement data, minimization of drive tests (minimization of drive tests, MDT) data, alarm data, configuration data, or network analysis data.

According to the service based management architecture (service based management architecture, SBMA) principle, the 3GPP standard further defines various management services. The management services include an MDAS, and the MDAS is a management service that has a management data analytics capability. The MDAS may also be referred to as an MDA MnS.

Considering that energy saving is a key issue facing 5G operators, to balance energy saving and network performance, section 6.6.1 in 3GPP technical report (technical report, TR) 28.809 version (version, V) 2.0.0 describes use cases of MDA assisted energy saving (MDA assisted energy saving), and proposes that the MDA can be used to help an MDAS consumer (MDA MnS consumer) make an energy saving decision.

In this application, for an MDAS, an MDAS consumer is an MDAS requester device, and an MDAS producer (MDA MnS producer) is an MDAS provider device. Specifically, for an energy saving analysis service, the MDAS consumer may be used to manage a network. For example, the MDAS consumer includes a network management system (network management system, NMS) of an operator (that is, a customer). The MDAS producer may be used to provide an analysis service for an analysis request of the MDAS consumer. For example, the MDAS producer can analyze management data related to energy saving (such as performance measurement data) and provide an analysis result related to energy saving on a current network for an operator to formulate an energy saving policy. The MDAS producer may further provide some energy-saving-related recommendations in an MDA report for the MDAS consumer to make an energy saving decision, so as to achieve better balance between energy efficiency and performance. It should be understood that analysis that can be performed by the MDAis not limited to energy saving analysis, and a recommendation that can be provided by the MDA is not limited to an energy saving decision recommendation.
3. An energy saving target (ES target) can reflect a customer's requirement for energy saving analysis. A customer may have different energy saving targets in different scenarios. For example, in sparsely populated suburban areas, it may be considered to shut down sites with low load as much as possible, to implement energy saving by minimizing energy consumption (energy consumption, EC). In other words, an energy saving target is to minimize energy consumption. In urban areas with sufficient energy and heavy traffic, it is more expected to improve energy efficiency (energy efficiency, EE) (energy efficiency for short), that is, utilization efficiency of unit energy is improved by improving spectral efficiency. In other words, an energy saving target is to maximize energy efficiency. Different energy saving targets may correspond to different energy saving measures. For example, if only energy consumption reduction is considered, sites with low load should be shut down as much as possible. If energy efficiency improvement is considered, if a throughput gain brought by enabling a cell exceeds energy consumption, the site should be kept enabled.
4. Digital twin (digital twin) is a technical means that creates a virtual entity of a physical entity in a digital manner, and uses historical data, real-time data, an algorithm model, and the like to simulate, verify, predict, and control an entire life cycle process of the physical entity. The virtual entity created by using the digital twin technology may be referred to as a digital twin. In the field of intelligent network operation and maintenance, digital twin is considered as a key technology that can improve an intelligent operation and maintenance capability of a network and build an endogenous intelligent network. The digital twin can better monitor and control the network, including better prediction of a network status and traffic. In a virtual twin environment, a network change is simulated and evaluated in advance, so that a digital and intelligent management level of the network is improved. Currently, many companies in the industry have considered to use the digital twin technology for digital simulation design and evaluation of sites.
5. Network energy consumption and network energy efficiency: The network energy consumption refers to energy consumed by a network element of a network in a running process, and a unit is joule (J). The network energy efficiency describes energy efficiency of a network element in a running process, that is, a ratio of network data traffic to network energy consumption. A unit is bit per joule (bit/J). With the rapid growth of communication traffic, energy consumption of mobile networks is increasing, and operators pay more attention to energy efficiency of the networks. How to reduce energy consumption and improve energy efficiency is a trend of energy saving analysis. Energy consumption reduction is to reduce energy consumption of a network element in a running process, and energy efficiency improvement is to improve energy efficiency of a network element in a running process.
6. Key performance index (key performance index, KPI) impact: If a customer can accept a decrease of values of some KPIs in an energy saving process, the customer may use a KPI and an acceptable KPI decreasing range (accepted decreasing) to indicate a KPI that can be decreased and an acceptable decreasing range of a value of the KPI, to maximize an energy saving target. In this application, the KPI and the acceptable decreasing range of the KPI value may be referred to as KPI impact.
7. A key performance index change range in this application is a predicted KPI decreasing range that may be caused when an energy saving recommendation is used. Execution of an energy saving recommendation often causes a KPI decrease. Therefore, a KPI change range corresponding to an energy saving recommendation may be predicted in a manner like simulation.
8. A recommendation for an energy saving issue, or referred to as an energy saving recommendation, is a recommendation that is determined based on an energy saving issue of a network in an energy saving analysis process and that can resolve or alleviate the energy saving issue. The energy saving recommendation described in section 6.6.1 of 3GPP TR 28.809 V2.0.0 may include one or more of a cell recommended to enter an energy saving state (ES-cell), a time period that allows to enter the energy saving state (ES time period), and a target cell recommended to transfer load of a cell in the energy saving state (offloading target cell).
9. Management data analytics function (management data analytics function, MDAF): An MnF is defined for an MnS in section 4.5 of 3GPP technical specification (technical specification, TS) 28.533 V16.7.0. An MnF is a logical entity that can serve as an MnS consumer or an MnS producer. The MDAF may be defined as an MnF that can provide an MDAS. To be specific, the MDAS producer in this application may be an MDAF, but the MDAS producer is not necessarily presented in a form of the MDAF.
10. An information object class (information object class, IOC) may be used to model a network resource and implement network management based on a network resource model. The network resource refers to a network device (such as a base station device), a network function (such as a radio network control plane function and a radio network user plane function), and a radio network resource (such as a radio network cell, a spectrum, and a physical resource block). The IOC is a model obtained by modeling the preceding network resource based on a network resource model modeling method. That is, the network resource is modeled as a class (class), and a specific implementation of the class is an instance (instance). According to the definition in section 3.1 in 3GPP TS28622 V18.8.1, the IOC represents a management aspect of the network resource, and describes information that can be transferred or used in a management interface. IOC attributes indicate various types of attribute information of the network resource. In this application, an energy saving analysis request, an energy saving analysis result, analysis capability information, and the like may be constructed by using the IOC.

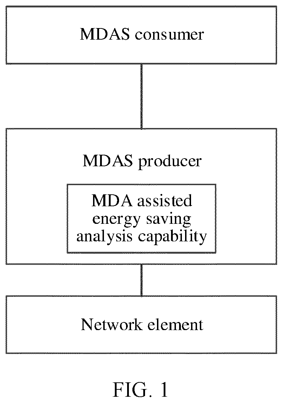

The communication method for network energy saving provided in embodiments of this application may be applied to a 4th generation (4th generation, 4G) communication system, a 5th generation (5th generation, 5G) communication system, or various future communication systems. Specifically, embodiments of this application may be applied to a communication system that supports an edge (edge) application architecture formulated by the 3rd generation partnership project (the 3rd generation partnership project, 3GPP). An MDA deployment scenario is shown in FIG. 1.

As shown in FIG. 1, in an actual deployment scenario, an MDAS producer may perform energy saving analysis on a network element based on a request of an MDAS consumer. The network element includes a hardware device in a network and software running on the hardware device, for example, a network element (network element, NE). In this application, the network includes but is not limited to an access network and a core network (core network, CN). In this application, the MDAS producer may have an assisted energy saving capability (MDA assisted energy saving capability), and the capability may be implemented by using an MDA assisted energy saving analysis (MDA assisted energy saving analysis) capability. The MDA assisted energy saving analysis function is one of internal functions of the MDAS producer. This is not limited in this application. The MDAS producer may further include another analysis function, for example, a coverage issue analysis function.

For example, the MDAS producer may be deployed in a product such as a mobile broadband (mobile broadband, MBB) automation engine (MBB automation engine, MAE). The MAE is a wireless network automation engine. As an intelligent management and control unit for a mobile network in an autonomous driving network solution, the MAE provides an automatic network operation and maintenance capability.

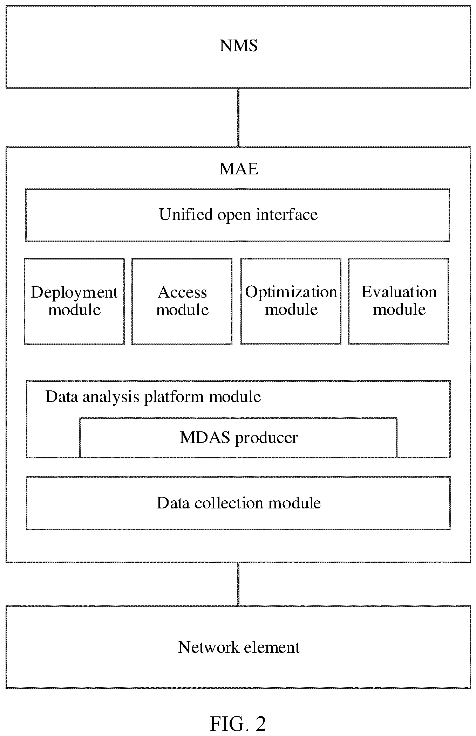

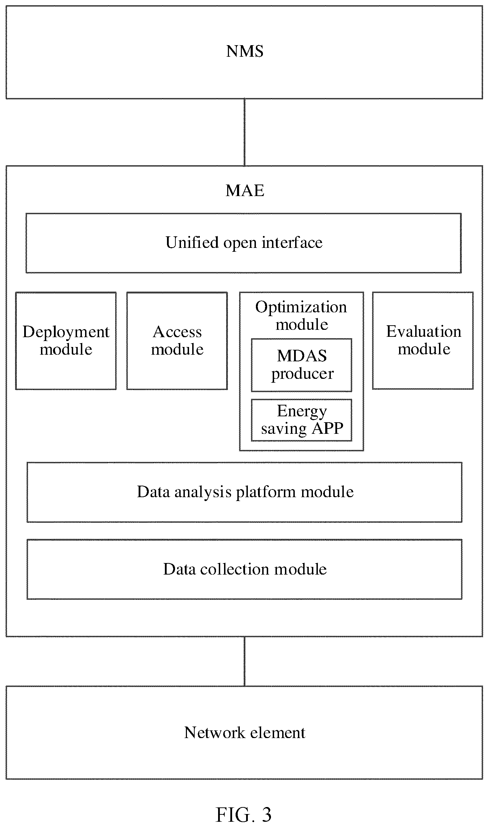

Optionally, there may be a plurality of actual deployment forms of the MDAS producer in the MAE. The following provides descriptions by using examples in FIG. 2 and FIG. 3.

In a deployment manner, the MDAS producer is deployed in a data analysis platform module, as shown in FIG. 2. In FIG. 2, an NMS may be responsible for operation, management, and maintenance functions of a network element in a network. Based on the architecture shown in FIG. 2, the MAE may implement an energy saving analysis function shown in this application by using the MDAS producer deployed in the data analysis platform module.

As shown in FIG. 2, the MAE may include a deployment (deployment) module, an access (access) module, an optimization (optimization) module, an evaluation (evaluation) module, the data analysis platform module, a data collection module, and a unified open interface (unified open API). The deployment module provides an integrated solution for typical operation and maintenance scenarios such as initial device deployment, transmission adjustment, parameter optimization, and base station reparenting. The access module provides basic network management functions such as configuration management, performance management, fault management, security management, log management, topology management, software management, and system management, and various optional functions. The optimization module uses an intelligent data analysis platform as an engine to enable a wireless network and implement intelligent operation and maintenance for network optimization. The evaluation module provides an operation and maintenance capability for designing and evaluating visualized services, helps users learn of MBB network quality, and supports agile service operation and maintenance and open innovation. In addition, the MAE provides scenario-oriented end-to-end automatic operation and maintenance through a scenario-based application (application, APP). For example, an energy saving app provides operation and maintenance for an energy saving scenario. The data collection module provides network element data collection and storage capabilities. The unified open interface provides a unified open interface for a customer to invoke a function in the MAE.

In another deployment manner, the MDAS producer is deployed in the optimization module. As shown in FIG. 3, specifically, the MDAS producer that provides an energy saving analysis service and a corresponding energy saving app may be jointly deployed in the optimization module, as shown in FIG. 3. Based on the architecture shown in FIG. 2, the MAE may implement the energy saving analysis function shown in this application by using the MDAS producer deployed in the optimization module. For functions of other modules of the MAE in FIG. 3, refer to the description of FIG. 2.

In the descriptions of this application, words such as "first" and "second" are merely used for distinguishing, and cannot be understood as an indication or implication of relative importance or an indication or implication of a sequence.

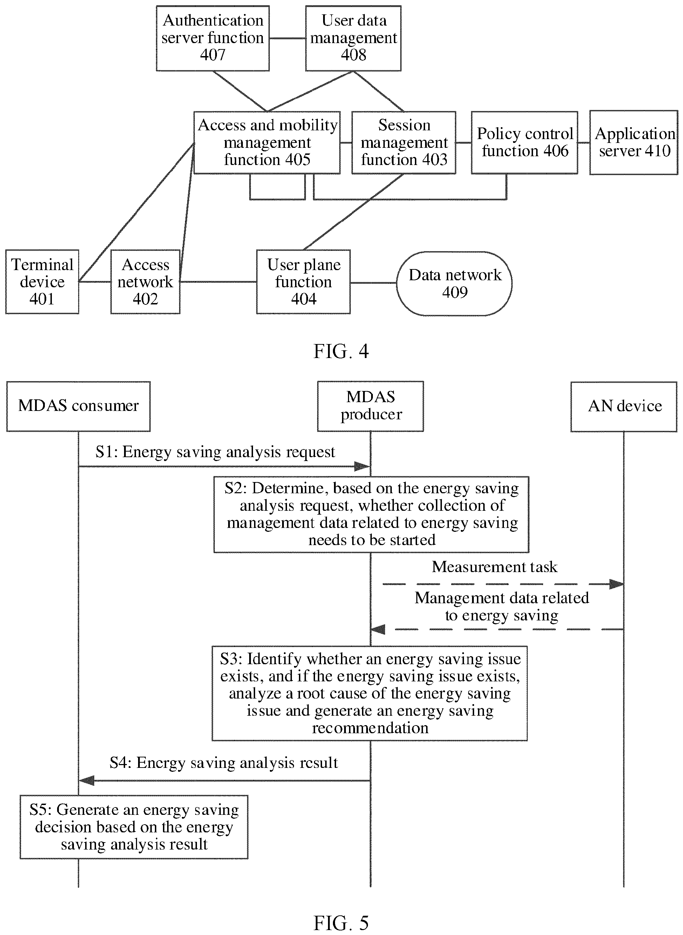

The architecture shown in FIG. 1 may be applied to a 5G network. Specifically, FIG. 4 is a schematic diagram of an example of a 5G network architecture applicable to an embodiment of this application. As shown in FIG. 4, in the 5G network architecture, a terminal device 401 may communicate with a core network through an access network 402. The terminal device may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, or the like. For ease of description, FIG. 4 shows only one terminal as an example. In an actual network, a plurality of terminals may coexist, and details are not described herein.

The AN may also be referred to as a radio access network (radio access network, RAN), and is collectively referred to as AN below. The AN is mainly responsible for providing a wireless connection for the terminal device 401, to ensure reliable transmission of uplink and downlink data of the terminal device 401, and the like. The AN may be a next-generation base station (generation NodeB, gNB) in a 5G new radio (new radio, NR) system, or may be an evolved NodeB (evolutional NodeB, eNB, or eNodeB) in an evolved universal mobile telecommunications system (universal mobile telecommunications system, UMTS) terrestrial radio access (evolved-UMTS terrestrial radio access, E-UTRA) network (E-UTRAN), for example, a long term evolution (long term evolution, LTE) system.

A session management function (session management function, SMF) 403 is mainly responsible for establishing a session, managing a session, and the like for the terminal device 401. An appropriate UPF may be selected for the terminal device 401 based on location information of the terminal device 401.

A user plane function (user plane function, UPF) 404 is a user plane function network element of the terminal device 401, and main functions include packet routing and forwarding, quality of service (quality of service, QoS) processing of user plane data, and the like. In the 5G system, a plurality of session anchor UPFs may be inserted into a user plane path of a protocol data unit (protocol data unit, PDU) session, to support a connection to a local data network (data network, DN), so that the terminal device can access an application in the local DN nearby. Specifically, a plurality of UPFs may be included between the terminal device and the DN. Some UPFs may be used as uplink classifiers (uplink classifier, ULCL) or branching points (branching point, BP), and some UPFs may be used as PDU session anchors (PDU session anchor, PSA).

An access and mobility management function (access and mobility management function, AMF) 405 mainly provides functions such as a termination point of a control plane of a radio access network, a termination point of non-access signaling, mobility management, lawful interception, and access authorization or authentication.

A policy control function (policy control function, PCF) 406 is mainly responsible for functions such as establishment, release, and change of a user plane transmission path.

An authentication server function (authentication server function, AUSF) 407 mainly provides functions such as user authentication.

A user data management (user data management, UDM) 408 mainly manages subscription data of a subscriber and the like.

A data network (data network, DN) 409 may be a network that provides a service for the terminal device 401.

An application server (application server, AS) 410 may provide a data service for an application in the terminal device.

FIG. 4 further shows a possible implementation of an interface in each entity, for example, an N4 interface between the access network 402 and the AMF 409, and an N9 interface between the access network 402 and the UPF 404. Details are not described herein one by one.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

In embodiments of this application, a 5G network scenario in a wireless communication network is used as an example to describe some scenarios. It should be noted that the solutions in embodiments of this application may further be applied to another wireless communication network, and a corresponding name may also be replaced with a name of a corresponding function in the another wireless communication network.

Using the network architecture shown in FIG. 4 as an example, an MDAS producer may generate an activation or deactivation recommendation for a cell based on load information of the cell and an energy saving policy set by an operator. In other words, the network management method provided in embodiments of this application may be used to manage a 5G network. Specifically, in the architectures shown in FIG. 2 and FIG. 3, the NE may include an access network element (such as the AN device shown in FIG. 4) and a core network element (including but not limited to the AMF, the SMF, the PCF, the application function (application function, AF), the AUSF, and the UDM shown in FIG. 4) in the architecture shown in FIG. 4.

Section 6.6.1 in 3GPP TR 28.809 V2.0.0 describes a solution of an MDA assisted energy saving use case. That is, an MDAS producer can analyze various types of management data related to energy saving, such as power, energy, and environment (power, energy and environmental, PEE) measurement values (measurements) of an AN device, a packet data convergence protocol (packet data convergence protocol, PDCP) data volume, physical resource block (physical resource block, PRB) utilization, a radio resource control (radio resource control, RRC) connection quantity, or a UE throughput. The MDAS producer may further provide an energy saving analysis result (or referred to as an energy saving analysis report) for an MDAS consumer to help the MDAS consumer make an energy saving decision.

For example, the energy saving analysis result generated by the MDAS producer includes the following content:
a geographical area location (location) in which an energy saving issue exists, a root cause (root cause) of the energy saving issue, a load trend prediction result (traffic load prediction), or an energy saving recommendation (ES recommendation). The geographical area location in which the energy saving issue exists includes, for example, an identifier of a cell in which the energy saving issue exists. The root cause of the energy saving issue is, for example, that a cell with extremely low load does not enter an energy saving state, causing an energy saving issue with high energy consumption. The load trend prediction result includes, for example, a predicted value of PRB utilization in a future time period (for example, in two hours).

As shown in FIG. 5, an MDA assisted energy saving analysis process may include the following steps.

S1: An MDAS consumer sends an energy saving analysis request to an MDAS producer. Optionally, the energy saving analysis request includes the following information.

Analysis type (analysis type): A value is "EnergySavingAnalysis", indicating that MDA assisted energy saving analysis is performed.

Report method (report method): indicates a manner for reporting, for example, file reporting or stream reporting. File reporting means that an energy saving analysis report is transmitted in a file form, and stream reporting means that an energy saving analysis report is transmitted in a manner of a binary data stream.

Optionally, before S1, the MDAS producer may send an analysis capability notification to the MDAS consumer, where the analysis capability notification includes an analysis type (supported analysis type) supported by the MDAS producer. For example, if the analysis type corresponding to MDA assisted energy saving is energy saving analysis (energy saving analysis), the analysis type supported by the MDAS producer that supports MDA assisted energy saving includes energy saving analysis.

S2: The MDAS producer determines, based on the energy saving analysis request, whether collection of management data related to energy saving needs to be started.

Specifically, after receiving the energy saving analysis request, the MDAS producer may determine whether the analysis type (analysis type) in the energy saving analysis request indicates to start energy saving analysis. For example, when a value of an analysis type field in the energy saving analysis request is "EnergySavingAnalysis", it indicates that it is determined to start energy saving analysis. If energy saving analysis needs to be started, the MDAS producer may further determine whether the management data related to energy saving of the network has been obtained. If the management data does not exist, data collection is started; or if the management data exists, data collection is not started.

Optionally, the MDAS producer sends a related measurement task to an AN device or another network element, and the AN device performs measurement and sends management data related to energy saving to the MDAS producer, so that the MDAS producer obtains the management data related to energy saving. In this application, the management data related to energy saving is data such as a running status of a network element used for energy saving analysis, and includes but is not limited to power, energy, and environment measurement values of the network element, a PDCP data volume, PRB utilization, an RRC connection quantity, or a UE throughput.

S3: The MDAS producer identifies whether an energy saving issue exists, and if the energy saving issue exists, analyzes a root cause of the energy saving issue and generates an energy saving recommendation. The energy saving issue includes that energy consumption is high, energy efficiency is low, energy efficiency has improvement room, or energy consumption has reduction room.

When determining the energy saving issue, the MDAS producer may determine whether an energy saving issue determining condition is met. If the condition is met, it may be determined that the energy saving issue exists. For example, the energy saving issue determining condition in the MDAS producer is "it is determined that energy consumption is excessively high when energy consumption is greater than 50 J", an actually measured energy consumption value is 60 J, and the MDAS producer determines that there is an issue of excessively high energy consumption. In addition, if the MDAS producer determines, based on energy-saving-related data in an area, that the energy saving issue exists, the area may be determined as an area in which the energy saving issue exists.

When analyzing the root cause of the energy saving issue, if the MDAS producer determines that there is an energy saving issue of excessively high energy consumption, the MDAS producer may predict, by using a load prediction model, an energy consumption value of a cell with excessively high energy consumption. If the energy consumption value is less than a preset threshold, it may be determined that the root cause of the energy saving issue is "a cell with extremely low load does not enter an energy saving state, causing high energy consumption".

In this application, an energy saving recommendation is a recommendation that can resolve or alleviate an energy saving issue. After determining that the energy saving issue exists, the MDAS producer may use a recommendation that can resolve or alleviate the energy saving issue as an energy saving recommendation. For example, for an energy saving issue of excessively high energy consumption, an energy saving recommendation may provide a cell that is recommended to enter an energy saving state, so that the MDAS consumer may reduce energy consumption by enabling the cell to enter the energy saving state.

S4: The MDAS producer sends an energy saving analysis result to the MDAS consumer, where the energy saving analysis result may include at least one of the energy saving issue, the root cause, and the energy saving recommendation. The energy saving recommendation includes a cell recommended to enter the energy saving state, a time period that allows to enter the energy saving state, or a target cell recommended to transfer load of a cell in the energy saving state. Specifically, the energy saving analysis result may further include at least one of a geographical area location in which the energy saving issue exists and a load trend prediction result.

S5: The MDAS consumer generates an energy saving decision based on the energy saving analysis result.

For example, the energy saving decision may indicate the MDAS consumer to execute an energy saving measure corresponding to the energy saving analysis result, to implement energy saving. For example, in the energy saving analysis result, if the energy saving recommendation includes a cell that is recommended to enter the energy saving state, the MDAS consumer may generate an energy saving decision, where the energy saving decision may indicate implementation of the following energy saving measure: delivering a configuration message for enabling the energy saving state of the cell to the cell, so that the cell enters the energy saving state. If the energy saving recommendation includes a time period that allows to enter the energy saving state, the MDAS consumer may generate an energy saving decision, where the energy saving decision may indicate implementation of the following energy saving measure: delivering a configuration message for enabling the energy saving state of the cell in a specified time period to the cell, so that the cell enters the energy saving state in the specified time period. If the energy saving recommendation includes a target cell recommended to transfer load of a cell in the energy saving state, the MDAS consumer may generate an energy saving decision, where the energy saving decision may indicate implementation of the following energy saving measure: transferring the load of the cell in the energy saving state to the target cell.

In the process shown in FIG. 5, the actions of the MDAS producer may be implemented by an MDAF with an energy saving analysis capability.

It should be understood that the energy saving decision in S5 may implement energy saving, that is, implement at least one of energy consumption reduction and energy efficiency improvement.

Different MDAS consumers have different targets for energy saving analysis. In some cases, an MDAS consumer requests energy saving analysis to reduce energy consumption. In some cases, an MDAS consumer requests energy saving analysis to improve energy efficiency. In some cases, an MDAS consumer requests energy saving analysis to reduce energy consumption and improve energy efficiency. Different energy saving targets may lead to different energy saving decisions required by the MDAS consumer. A current energy saving analysis process cannot be performed based on an energy saving target of an MDAS consumer, and consequently, an energy saving analysis result may not meet a requirement of the MDAS consumer. For example, an analysis report received by an MDAS consumer that expects to reduce energy consumption indicates an energy saving recommendation for improving energy efficiency. In this case, a target of reducing energy consumption cannot be achieved, and consequently, the energy saving analysis result is not effective.

To improve reliability of an energy saving analysis process and accuracy of an energy saving analysis result, an embodiment of this application provides a communication method for network energy saving. The method may be performed by a first device and a second device. Optionally, the first device is an MDAS producer or a device configured to implement an MDAS producer function, and the second device is an MDAS consumer or a device configured to implement an MDAS consumer function.

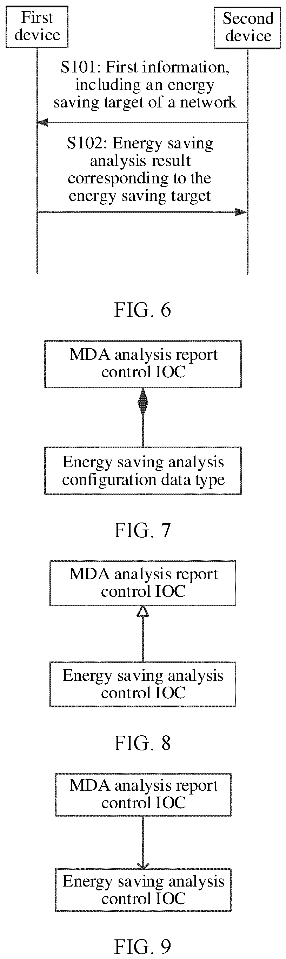

As shown in FIG. 6, a procedure of a communication method for network energy saving according to an embodiment of this application includes the following steps.

S101: A second device sends first information to a first device, where the first information includes an energy saving target of a network.

Correspondingly, the first device receives the first information shown in S101.

The energy saving target includes at least one of energy consumption reduction and energy efficiency improvement. Specifically, the energy saving target may include an energy saving target name (name). For example, an energy saving target name corresponding to energy consumption reduction is EC, and an energy saving target name corresponding to energy efficiency improvement is EE. The energy saving target may further include a weight (weight) corresponding to the energy saving target name, indicating a weight of energy consumption reduction and a weight of energy efficiency improvement. For example, the energy saving target name indicated by the first information includes EC and EE, a weight corresponding to EC is 0.3, and a weight corresponding to EE is 0.7, indicating that the energy saving target of an MDAS consumer includes energy consumption reduction and energy efficiency improvement. In this case, the first device determines a first recommendation with a goal of maximizing (-0.3 * EC quantized value + 0.7 * EE quantized value). The EC quantized value is an energy consumption value predicted after the second device follows the first recommendation, and the EE quantized value is an energy efficiency value predicted after the second device follows the first recommendation. When one energy saving target name in energy consumption reduction and energy efficiency improvement is supported, the energy saving target may be the energy saving target name.

In this application, the first information may be carried in an energy saving analysis request sent by the second device to the first device. For example, refer to S3. The first device may send the energy saving analysis request to the second device, and use the energy saving analysis request to carry the first information. Optionally, the energy saving analysis request may further include an analysis area (analysis area), to indicate an area in which energy saving analysis needs to be performed. Optionally, the energy saving analysis request may further include an analysis type and/or a report method. For the analysis type and/or the report method, refer to the description of S3 in this application.

Optionally, the first information may further include KPI impact of the network, or referred to as energy saving concerned KPI impact (ES concerned KPI impact). The key performance index impact indicates a KPI and an acceptable KPI decreasing range concerned by the MDAS consumer in energy saving analysis. For example, the KPI impact indicates a maximum acceptable KPI decreasing value (decreasing value), and the decreasing value may be a numerical value or a proportion value. The KPI may include a call drop rate or a user rate (or a user-perceived rate), or include another KPI defined by a standard, or include another KPI customized by the MDAS consumer, or the like. The KPI impact may indicate a KPI and a tolerable KPI decreasing range concerned by the second device. The KPI impact may include a KPI name and an acceptable KPI decreasing range. The KPI name is, for example, a call drop rate or a user rate, or an identifier of a call drop rate or an identifier of a user rate.

The KPI impact may further include a scenario identifier (scenario identifier), to indicate a scenario associated with the acceptable KPI decreasing range, so as to distinguish between acceptable KPI decreasing ranges of the second device in different scenarios. In this application, a possible scenario of energy saving analysis may include: a commercial area (which has the following characteristics: obvious tidal effect, low traffic at night, and a high user experience requirement), a residential area (which has the following characteristics: heavy traffic all day, insignificant traffic peaks and troughs, and a high capacity requirement), and a suburban area (which has the following characteristics: low traffic, sparse sites, long coverage, and a low site capacity). In addition, the scenario may further include a government unit, a core business district, a very important person (very important person, VIP) community, or the like. The tidal effect in communication refers to a phenomenon that a large quantity of people converge in a business district during working hours and leave after work. This phenomenon causes traffic fluctuation in a mobile communication system. Consequently, burst heavy traffic occurs in a hotspot area at a specific moment (for example, including working hours).

For example, the second device may further send third information to the first device, and the third information may be used by the first device to determine an energy saving recommendation corresponding to the energy saving issue of the network. Optionally, the third information includes at least one of an energy saving analysis area, an energy saving analysis period, an energy saving analysis result report period, an energy saving RAT, and an energy saving analysis domain. For example, the energy saving analysis request may further include the third information.

The energy saving analysis area (ES analysis area) indicates an area for energy saving analysis. The area in this application may be a geographical area, or may be a cell list.

The energy saving analysis period (analysis period) indicates a period for performing energy saving analysis.

The energy saving analysis result report period (report period), or referred to as a report period for short, indicates a period for reporting the energy saving analysis result.

The energy saving RAT (ES RAT) indicates a network standard, that is, indicates a network standard in which energy saving needs to be implemented. An optional value of the energy saving RAT includes "NR" (indicating that energy saving needs to be implemented in an NR RAT), "E-UTRA" (indicating that energy saving needs to be implemented in an E-UTRARAT), or "both" (indicating that energy saving needs to be implemented in both an NR RAT and an E-UTRARAT).

The energy saving analysis domain (ES analysis domain) indicates a domain for which energy saving is performed. In this application, the domain may include a RAN and/or a core network. An optional value of the energy saving analysis domain is RAN (indicating that energy saving analysis is performed for an access network) and CN (indicating that energy saving analysis is performed for a core network).

Optionally, the second device may further send, to the first device, a condition indicating whether the energy saving issue exists. The condition may also be referred to as an energy saving issue condition (ES issue condition), and may be used by the first device to determine whether the energy saving issue exists. For example, the energy saving issue condition may indicate to determine that the energy saving issue is excessively high energy consumption when energy consumption is higher than a specified threshold, to determine that the energy saving issue is excessively low energy efficiency when energy efficiency is lower than a specified threshold, to determine that the energy saving issue is that energy consumption has reduction room when a value by which energy consumption can decrease exceeds a specified threshold, or determine that the energy saving issue is that energy efficiency has improvement room when a value that energy efficiency can increase exceeds a specified threshold.

In a possible implementation of S 101, the second device may send the first information after receiving a notification indicating that the first device has an energy saving analysis capability (referred to as an analysis capability notification below). For example, an internet protocol (internet protocol, IP) address of the first device is preconfigured in the second device, and the second device sends the first information to the address when energy saving analysis is required. Alternatively, the first device may use a notification to carry address information of the first device. For example, the first device sends the notification in a multicast or broadcast manner, and the second device that receives the notification sends the first information to the address information.

Optionally, the notification may indicate that an analysis type supported by the first device includes energy saving analysis. For example, the notification indicates that an analysis type corresponding to MDA assisted energy saving is energy saving analysis.

Optionally, the notification may further include an energy saving analysis capability (ES analysis capability) of the first device (which may be referred to as a first configuration), so that the second device selects an appropriate first device based on the energy saving analysis capability of the first device and an energy saving analysis requirement, to send the energy saving analysis request to the first device. The energy saving analysis capability may include at least one of the following:
a supported energy saving target type (supported ES target type), for example, including an energy saving target name supported by the first device, or including an energy saving target name and a weight supported by the first device;
a supported energy saving analysis key performance index (supported analysis KPI), for example, indicating that the first device supports evaluation of a change range of a KPI such as a call drop rate or a user rate under the energy saving recommendation;
a supported analysis scenario (supported analysis scenario), for example, indicating that the first device supports energy saving analysis in a scenario such as a residential area, a commercial area, or a suburban area;
a supported energy saving analysis level (supported analysis level), for example, indicating that the first device supports energy saving analysis performed by using a subnet, a network element, a slice, or the like as a level;
a supported energy saving RAT (supported ES RAT), for example, indicating that the first device supports energy saving analysis performed for an NR RAT and/or an E-UTRA RAT; and
a supported energy saving analysis domain (supported ES analysis domain), for example, indicating that the first device supports energy saving analysis performed for a core network and/or an access network.

Based on the first configuration, the second device may select an appropriate first device based on the energy saving analysis capability of the first device, to implement energy saving analysis by using the first device, thereby further improving reliability of the energy saving analysis.

It should be understood that the notification may be directly or indirectly sent by the first device to the second device. This is specifically described in a subsequent example in this application, and details are not described herein. The direct sending means that the notification is sent by the first device to the second device without being interpreted and processed by another device. The indirect sending means that the notification is sent by the first device to the second device through another device (for example, a fourth device) with interpretation and processing by the another device. The fourth device may be configured to manage the first device. For example, the fourth device may manage a plurality of first devices. The first device sends the first configuration through the fourth device, so that efficiency of managing first devices and efficiency of selecting a first device by the second device can be improved.

S102: The first device sends an energy saving analysis result corresponding to the energy saving target to the second device.

Correspondingly, the second device receives the energy saving analysis result. The second device may generate an energy saving decision based on the energy saving analysis result, that is, execute an energy saving measure corresponding to the energy saving analysis result, to implement energy saving. For a manner in which the second device generates the energy saving decision based on the energy saving analysis result, refer to the description in S5.

The energy saving analysis result may be carried in the energy saving analysis result shown in FIG. 5, or the energy saving analysis result may include the energy saving analysis result shown in FIG. 5. For example, the energy saving analysis result obtained by the first device may include content of the energy saving analysis result shown in S4.

According to the method shown in FIG. 6, the first device may determine the energy saving analysis result based on the energy saving target of the network, so that the energy saving analysis result meets a customer's requirement for the energy saving target of the network, thereby improving reliability of the energy saving analysis process and effectiveness of the analysis result. For example, if the customer's requirement for energy saving analysis is to reduce network energy consumption, the second device may indicate in S101 that the energy saving target is to reduce energy consumption, and correspondingly, the first device may determine the energy saving analysis result with a goal of reducing energy consumption. For example, in this case, the energy saving analysis result can reflect whether an energy saving issue of excessively high energy consumption exists in the network, and if the issue of excessively high energy consumption exists, the energy saving analysis result may further include the first recommendation that can reduce energy consumption.

In implementation of S 102, the first device may determine, based on the energy saving analysis request from the second device, whether collection of management data related to energy saving needs to be started. Collected data is corresponding to the energy saving target.

Refer to S4. If collection of management data related to energy saving needs to be started, the first device may deliver a related measurement task to the AN device, and the AN device performs measurement to obtain the management data related to energy saving. The management data related to energy saving may be, for example, data such as power, energy, and environment measurement values of the AN device, a PDCP data volume, PRB utilization, an RRC connection quantity, or a UE throughput.

After collecting the energy-saving-related data, the first device may further determine, based on the energy-saving-related data, whether the energy saving issue corresponding to the energy saving target exists in the network. If the energy saving target includes energy consumption reduction, the energy saving issue includes at least one of excessively high energy consumption of the network and energy consumption reduction room. If the energy saving target includes energy efficiency improvement, the energy saving issue includes at least one of excessively low energy efficiency of the network and energy efficiency improvement room. Optionally, if the energy saving analysis request includes the energy saving issue condition, the first device may determine, based on the energy saving issue condition, whether the energy saving issue exists. Therefore, the first device may determine, based on the energy saving issue condition indicated by the second device, whether the energy saving issue exists. The energy saving issue condition may be dynamically set or adjusted based on a requirement of the second device, to improve effectiveness of the energy saving analysis result.

Optionally, if the energy saving issue corresponding to the energy saving target exists, as shown in S5, the first device may further determine a root cause of the energy saving issue, and/or generate the first recommendation corresponding to the energy saving issue. The energy saving analysis result may include the root cause and/or the first recommendation.

If the energy saving issue includes excessively high energy consumption, the root cause may include that the energy consumption is excessively high because a cell with extremely low load does not enter the energy saving state.

The first recommendation may be a recommendation that can achieve the energy saving target. For example, if the energy saving target is energy consumption reduction, the second device can implement energy consumption reduction by executing a corresponding energy saving measure based on the first recommendation. For example, the first recommendation may include at least one of a cell recommended to enter the energy saving state, a time period that allows to enter the energy saving state, and a target cell recommended to transfer load of a cell in the energy saving state. The first recommendation is determined by the first device based on the energy saving target, and the second device may execute a corresponding energy saving measure based on the first recommendation to achieve the energy saving target. For a manner in which the second device executes the corresponding energy saving measure based on the first recommendation, refer to the description in S7.

If the first information includes the KPI impact, the first device may specifically determine, based on the energy saving target and the KPI impact, the first recommendation corresponding to the energy saving issue. The energy saving measure usually causes specific network KPI decreasing. In addition, different MDAS consumers have different concerns about a network KPI and have different tolerances for KPI decreasing. Some indices cannot be decreased, and some indices can be decreased but there is a bottom line for decreasing. For example, if main indices for an operator in a province include an out-of-service rate of users and a call completion rate, the operator may accept a decrease in a call drop rate and a user rate caused by energy saving. Out-of-service refers to exiting a service. For a user, out-of-service means that there is no communication signal, and communication cannot be performed. The out-of-service rate is a ratio of a quantity of out-of-service times to a total quantity of call times in a measurement period. The call completion rate is a ratio of a quantity of call completion times to a total quantity of call times in a measurement period. Main indices for another operator in the province include a call drop rate and a user rate. The operator requires that a call drop rate caused by energy saving is not greater than 2% and a proportion of cells in which a user rate is lower than 30M is not greater than 0.2%. It can be learned that, different MDAS consumers have different requirements for energy saving KPI impact. That the energy saving measure causes the KPI impact unacceptable is also one of causes why the energy saving analysis result is not effective. Energy saving analysis needs to be performed based on the KPI impact. Because the first information may include the KPI impact, the first device may receive the KPI impact from the second device, so that a requirement of the second device for an acceptable KPI decreasing range is considered in a process of determining the energy saving analysis result sent by the first device, thereby further improving reliability of the energy saving analysis process and effectiveness of the analysis result.

In this application, the first device may further evaluate, based on the first recommendation, a KPI change range that may be caused by execution of the energy saving measure corresponding to the first recommendation (referred to as a KPI change range corresponding to the first recommendation for short below), to ensure that a KPI decreasing value caused by the energy saving measure does not exceed the acceptable KPI decreasing range indicated by the KPI impact, so that the energy saving analysis result better adapts to a requirement of the MDAS consumer for the KPI impact. This avoids an excessive KPI decrease. If the KPI decreasing value caused by the energy saving measure exceeds the acceptable KPI decreasing range indicated by the KPI impact, the first device may re-determine the first recommendation. In addition, optionally, when the first information does not include the KPI impact, the first device may consider the KPI as a specified value by default.

Optionally, if the first device receives the third information from the second device, the first device may determine the first recommendation based on the third information. Specifically, the first device may determine the first recommendation based on the energy saving target, the KPI impact, and the third information.

For example, if the third information includes the energy saving analysis area, the first device may determine, based on the management data related to energy saving in the energy saving analysis area, whether the energy saving issue corresponding to the energy saving target exists. If the third information includes the report period, the first device may periodically analyze, based on the report period, whether the energy saving issue corresponding to the energy saving target exists in the network. If the third information includes the energy saving RAT, the first device may analyze whether the energy saving issue corresponding to the energy saving target exists in the RAT. If the third information includes the energy saving analysis domain, correspondingly, the first device may analyze whether the energy saving issue corresponding to the energy saving target exists in the energy saving analysis domain. If the energy saving issue exists, the first device may further analyze, based on the KPI impact, the first recommendation corresponding to the energy saving issue. Therefore, in this application, the first device may determine the energy saving analysis result based on at least one of the energy saving analysis area, the energy saving analysis period, the energy saving analysis result report period, the energy saving RAT, and the energy saving analysis domain, to further improve reliability and integrity of the energy saving analysis result, and better assist the second device in determining the energy saving decision.

In addition, in this application, the first recommendation, the energy saving target, and the KPI impact may be further used to determine the second information corresponding to the first recommendation. The second information includes at least one of energy saving effect prediction information (ES target prediction) and a KPI change range, to further improve integrity of the energy saving analysis result, and better assist the second device in determining the energy saving decision. The first device may determine the second information based on the first recommendation, the energy saving target, and the KPI impact, and use the first recommendation and the second information as content of the energy saving analysis result. That is, the energy saving analysis result may include the first recommendation for the energy saving issue of the network and the second information corresponding to the first recommendation. When the energy saving analysis result includes at least one of the energy saving effect prediction information and the key performance index change range, integrity of the energy saving analysis result determined by the first device may be further improved, to better assist the second device in determining the energy saving decision.

If the second information includes the energy saving effect prediction information, in this case, the energy saving analysis result may reflect energy saving effect corresponding to the first recommendation that is predicted by the first device, so that the second device determines, based on the predicted energy saving effect, whether to use the energy saving analysis result. If the second information includes the KPI change range, in this case, the energy saving analysis result may reflect a KPI decreasing value caused by the first recommendation and predicted by the first device, so that the second device determines, based on the predicted KPI decreasing value, whether to use the energy saving analysis result.

The energy saving effect prediction information may be used to predict a change value of energy consumption and/or energy efficiency that may be achieved after the energy saving measure corresponding to the first recommendation is taken. For example, the energy saving target is energy consumption reduction, and the energy saving effect prediction information may indicate a deceasing value of energy consumption after the energy saving measure corresponding to the first recommendation is taken, or indicate a decreased value of energy consumption.

The KPI change range may include a KPI name and a KPI decreasing value. The KPI decreasing value may be an absolute decreasing value or a decreasing percentage, and indicates impact of taking the energy saving measure corresponding to the first recommendation on the KPI. For example, the KPI name is user rate, and the KPI decreasing value is a predicted decreasing value or decreasing proportion of the user rate. The decreasing value is, for example, a decrease of 5M, and the decreasing proportion is, for example, a decrease of 1%.

Specifically, the first device may determine the second information based on the first recommendation, the energy saving target, and the KPI impact. When the first device determines the second information, the first device may predict, through simulation, a network running status within a period of time after the energy saving decision corresponding to the first recommendation is used, and predict, according to the network running status, improvement effect of the energy saving issue corresponding to the energy saving target, to obtain energy saving effect prediction information. In addition, the first device may further predict, through simulation, a KPI change range in a period of time after the energy saving decision corresponding to the first recommendation is used, to predict a change range of an energy saving concerned KPI after a period of time, to obtain the KPI change range.

For example, if the first device obtains an energy saving target name (for example, energy consumption) and a KPI name (for example, user rate) based on the energy saving target and the KPI impact, a simulation process is, for example, that the first device uses a prediction model to predict a change value of energy consumption and a decreasing value of the user rate after the first recommendation is used. The change value of the energy consumption may be used as the energy saving effect prediction information, and the decreasing value of the user rate may be used as the KPI change range. It should be understood that the prediction model may include a machine learning (machine learning, ML) model. The prediction model may be preset in the first device.

Alternatively, a third device other than the first device and the second device may determine the second information based on the first recommendation, the energy saving target, and the KPI impact. The third device may be a network function, and may be co-located with the first device in a physical entity, or may be independently disposed in a different physical entity from the first device. Optionally, the third device is a network simulator network element (simulator) of the first device, for example, a digital twin. Therefore, in this application, another device other than the first device may determine the second information, to share processing load of the first device in a process of obtaining the energy saving analysis result, and improve energy saving analysis efficiency.

If the third device determines the second information based on the first recommendation, the energy saving target, and the KPI impact, after determining the first recommendation based on the energy saving target and the KPI impact, the first device may send the first recommendation, the energy saving target, and the KPI impact to the third device, and receive the second information from the third device. The first recommendation, the energy saving target, and the KPI impact are used by the third device to determine the second information. Specifically, the third device may determine the second information based on the first recommendation, the energy saving target, and the KPI impact. For a determining manner, refer to the foregoing described manner in which the first device determines the second information based on the first recommendation, the energy saving target, and the KPI impact. Details are not described again.

In this implementation, optionally, the second device may indicate to the first device that the third device determines the second information. For example, the second device sends a first indication to the first device. The energy saving analysis request sent by the second device to the first device may carry the first instruction. The first indication may be referred to as a simulator network element indication (simulator indication). The first device may obtain the second information from the third device based on the first indication of the second device, so that the energy saving analysis process better meets an energy saving analysis requirement of the second device. The first indication may indicate that the third device determines the second information. For example, the first indication may include information about the third device, and the information about the third device is, for example, an identifier and/or an address of the third device. Alternatively, the first device may consider by default that the third device determines the second information.

It should be understood that, after the third device is deployed, information about the third device needs to be configured, for example, an address and a simulation capability supported by the third device are configured. The simulation capability supports at least the third device in determining the second information based on the first recommendation, the energy saving target, and the KPI impact. Optionally, this step may be performed in a manner of manual configuration before deployment. Alternatively, a configuration message between the third device and the first device may be added, and the first device configures the address and the simulation capability of the third device by using the configuration message.

Optionally, the energy saving analysis result may further include a scenario identifier, to indicate scenario information obtained through current energy saving analysis, thereby improving integrity of the energy saving analysis result and better assisting the second device in making the energy saving decision. Specifically, the scenario may include a commercial area, a residential area, a suburban area, or the like. For example, the first device identifies, based on current load prediction information of the energy saving area, a scenario to which the area belongs, indicates the scenario by using a scenario identifier, and further determines an energy saving recommendation applicable to the scenario. Correspondingly, after receiving the energy saving analysis result, the second device may determine, based on the scenario identifier carried in the energy saving analysis result, whether the first recommendation is applicable to the scenario indicated by the scenario identifier. If the first recommendation is applicable to the scenario indicated by the scenario identifier, the second device may use the energy saving analysis result, and use an appropriate energy saving measure in the scenario.

Optionally, the energy saving analysis result may further include content of the energy saving analysis result in S4 shown in FIG. 5.

In this application, after receiving the energy saving analysis result, the second device may perform a first operation based on the energy saving analysis result. The first operation may be an operation performed by the MDAS consumer based on the energy saving decision after the MDAS consumer generates the energy saving decision based on the energy saving analysis result. For example, the first operation may include the energy saving measure corresponding to the first recommendation. The second device may notify, by using a second indication, the first device of the first operation performed by the second device, so that the first device updates the energy saving analysis result according to the first operation. Specifically, the first device may update the first recommendation according to the first operation (or may obtain a second recommendation according to the first operation, and replace the first recommendation with the second recommendation, to update the first recommendation). For example, the second device performs the first operation, and consequently, the management data related to energy saving collected by the first device from the AN device or another network element changes. In this case, after receiving the second indication, the first device may collect changed management data related to energy saving, and further determine an updated first recommendation based on the changed management data related to energy saving.

Optionally, the first device may further update the second information according to the first operation, and send updated second information to the second device. Therefore, the first device may update the second information, to update the energy saving analysis result in a timely manner. This further improves reliability of the energy saving analysis result.

For example, in a manner of updating the second information, the first device may update the first recommendation according to the first operation in the foregoing described manner, and re-determine the second information based on the updated first recommendation, to update the second information. For a manner of updating the second information by the first device, refer to descriptions of determining the second information in this application.

Alternatively, the first device may send the updated first recommendation to the third device, so that the third device updates the second information. The first device receives the updated second information from the third device, and the first device sends the updated second information to the second device. For a manner in which the third device updates the second information, refer to a manner in which the first device updates the second information. Therefore, the third device may update the second information, so that the third device shares processing load of the first device in the energy saving analysis process.

In addition, if the third device determines the second information based on the first recommendation, the energy saving target, and the KPI impact, the second device may further notify the third device of the first operation and/or the updated first recommendation, and the third device updates the second information based on the first operation and/or the updated first recommendation. For example, if the second device performs the first operation, and consequently, the management data related to energy saving collected by the third device from the AN device changes, the third device may collect changed management data related to energy saving according to the first operation, and further determine the updated second information based on the changed management data related to energy saving.

It should be understood that after obtaining the updated first recommendation and the updated second information, the first device may send the updated first recommendation and the updated second information to the second device. For example, the first device may send an updated energy saving analysis result to the second device, and the updated energy saving analysis result may include the updated first recommendation and the updated second information. The updated energy saving analysis result may be used by the second device to determine an energy saving decision corresponding to the updated energy saving analysis result. For a manner in which the second device determines the energy saving decision corresponding to the updated energy saving analysis result, refer to the description of the manner in which the second device determines the energy saving decision based on the energy saving analysis result. For example, refer to S5. Details are not described again in this application.

In an implementation of S101, the second device may use the first information as a parameter in an interface message between the second device and the first device, and transfer the parameter by using the interface message. In another implementation, a management service interface operation defined in section 11.1 of 3GPP TS 28.532 V16.8.1 may be reused, an energy saving analysis control IOC is defined, and the first information is transmitted by creating an energy saving analysis control IOC instance. The following describes a transmission process of the first information by using an example in which the first information is an energy saving analysis request.

Similarly, in an implementation of S102, the first device may use the energy saving analysis result as a parameter in the interface message between the first device and the second device and transfer the parameter by using the interface message. In another implementation, an energy saving analysis result IOC may be defined, and a process of constructing the energy saving analysis result may implement transmission of the energy saving analysis result in a manner of a configuration operation and the energy saving analysis result IOC. Content of an analysis report IOC is information included in the energy saving analysis result, for example, at least one of the first recommendation, the second information, the geographical area location in which the energy saving issue exists, the root cause of the energy saving issue, the load trend prediction result, the cell recommended to enter the energy saving state, the time period that allows to enter the energy saving state, and the target cell recommended to transfer load of a cell in the energy saving state.

The following uses a process of transmitting the energy saving analysis request as an example to describe a method for transmitting the first information by creating an energy saving analysis control IOC instance. For a transmission manner of the energy saving analysis result, refer to an implementation.

Optionally, if the energy saving analysis request is constructed in a manner of creating an energy saving analysis control IOC instance, examples of possible construction manners and transmission manners of the energy saving analysis request are shown in a solution 1 and a solution 2.

### Solution 1

An IOC used to construct the energy saving analysis request may be defined as an MDA analysis report control IOC (denoted as <<IOC>>MDAAnalysisReportControl), and different analysis scenarios are distinguished by using a value of an analysis type attribute of the MDA analysis report control IOC. When the analysis type attribute is energy saving analysis, it indicates that MDA assisted energy saving analysis is requested.

Optionally, the solution 1 may include the following four sub-solutions.

### Sub-solution 1

For the scenario of MDA assisted energy saving analysis, an energy saving analysis configuration data type (data type) may be defined in the sub-solution 1, is denoted as «Datatype»EnergySavingAnalysisProfile, and is used as an attribute of the MDA analysis report control IOC. The MDA assisted energy saving analysis scenario is an analysis scenario in which the MDAS consumer requests the MDAS producer to provide MDA assisted energy saving analysis.

In the sub-solution 1, any item of the analysis type, the report method, the analysis period, and the report period may be used as an attribute of the MDA analysis report control IOC. At least one of the analysis area, the energy saving target, the energy saving issue condition, the energy saving concerned KPI impact, the energy saving RAT, or the energy saving analysis domain may be used as an attribute of the energy saving analysis configuration data type.

For example, a definition of the MDA analysis report control IOC in the sub-solution 1 is shown in Table 1.

**Table 1**

| Attribute name (attribute name) | Support qualifier (support qualifier) | Readable (is readable) | Writable (is writable) | Invariant (is invariant) | Notifiable (is notifiable) |
|---|---|---|---|---|---|
| Analysis type | M | T | T | F | T |
| Report method | M | T | T | F | T |
| Analysis period | O | T | T | F | T |
| Report period | O | T | T | F | T |
| Energy saving analysis configuration | CM | T | T | F | T |

It should be understood that in the table shown in this application, M represents mandatory (mandatory), O represents optional (optional), CO represents conditional optional (conditional optional, that is, optional under a specific condition), CM represents conditional mandatory (conditional mandatory), that is, mandatory under a specific condition, T represents true (true), and F represents false (false).

Table 2 shows the energy saving analysis configuration data type. In the table provided in this embodiment of this application, an attribute whose attribute name includes the ">" symbol is included in an attribute whose attribute name does not include the ">" symbol before the attribute. Table 2 is used as an example herein for description. For other tables, refer to the understanding. As shown in Table 2, the "KPI name" attribute, the "acceptable decreasing range" attribute, and the "scenario identifier" attribute are included in the "energy saving concerned KPI impact" attribute.

**Table 2**

| Attribute name | Support qualifier | Readable | Writable | Invariant | Notifiable |
|---|---|---|---|---|---|
| Energy saving concerned KPI impact | | | | | |
| >KPI name | M | T | T | F | T |
| >Acceptable decreasing range | O | T | T | F | T |
| >Scenario identifier | O | T | T | F | T |

| Energy saving target | | | | | |
|---|---|---|---|---|---|
| >Energy saving target name | M | T | T | F | T |
| >Weight | O | T | T | F | T |

| Attribute name | Support qualifier | Readable | Writable | Invariant | Notifiable |
|---|---|---|---|---|---|
| Energy saving issue condition | O | T | T | F | T |
| Energy saving analysis area | O | T | T | F | T |
| Energy saving RAT | O | T | T | F | T |
| Energy saving analysis domain | O | T | T | F | T |

As shown in FIG. 7, the relationship between the MDA analysis report control IOC and the energy saving analysis configuration data type may be represented as follows: The MDA analysis report control IOC includes the energy saving analysis configuration data type. In FIG. 7, a connection line including a solid diamond arrow indicates that two IOCs or an IOC and a data type are in an inclusion relationship, that is, a whole-part relationship. The MDA analysis report control IOC pointed to by the diamond arrow is a whole, and the energy saving analysis configuration data type pointed to by the other end of the connection line is a part, that is, the MDA analysis report control IOC includes the energy saving analysis configuration data type. In addition, one MDA analysis report control IOC shown in FIG. 7 is used as a whole, and may include zero or one energy saving analysis configuration data type.

Herein, the sub-solution 1 is used as an example to describe a manner of constructing the energy saving analysis request based on the IOC. For another solution in this application in which information transmission is implemented by using the IOC, refer to the implementation.

According to the sub-solution 1, when constructing the energy saving analysis request shown in this application, the MDAS consumer may use the energy saving analysis request to carry an attribute name shown in the MDA analysis report control IOC and a value corresponding to the attribute name, and carry an attribute name shown in the energy saving analysis configuration data type and a value corresponding to the attribute name, and send the constructed energy saving analysis request to the MDAS producer, to transmit the energy saving analysis request provided in this embodiment of this application.

Herein, Table 1 and Table 2 are used as examples to describe a manner in which the second device sends the energy saving analysis request to the first device. For a process of sending an energy saving analysis request, an energy saving analysis report, and an energy saving analysis capability described subsequently, refer to the implementation. If the first information sent by the second device to the first device includes the energy saving target and the energy saving concerned KPI impact, and the third information sent by the second device to the first device includes the energy saving analysis area, the energy saving analysis period, the energy saving analysis result report period, the energy saving RAT, and the energy saving analysis domain, the second device may construct an energy saving analysis request that includes attribute names of the MDA analysis report control IOC and values corresponding to the attribute names shown in Table 1 and attribute names of the energy saving analysis configuration data type and values corresponding to the attribute names shown in Table 2. According to Table 1, the energy saving analysis request may carry the attribute name and value of the analysis type, the attribute name and value of the report method, the attribute name and value of the energy saving analysis period, the attribute name and value of the report period, and each attribute name and value indicated by the energy saving analysis configuration data type. As shown in Table 2, the attribute indicated by the energy saving analysis configuration data type is energy saving concerned KPI impact (including a KPI name, an acceptable decreasing range, and a scenario identifier), the energy saving target (including an energy saving target name and a weight), the energy saving issue condition, the energy saving analysis area, the energy saving RAT, and the energy saving analysis domain.

### Sub-solution 2

In the sub-solution 2, at least one of the analysis type, the report method, the analysis area, the energy saving target, the energy saving issue condition, the energy saving concerned KPI impact, the analysis period, the report period, the energy saving RAT, or the energy saving analysis domain included in the energy saving analysis request is used as an attribute of the MDA analysis report control IOC. When the analysis type is energy saving analysis, at least one of the energy saving target and the energy saving concerned KPI impact is used as a mandatory attribute of the MDA analysis report control IOC, and at least one of the analysis area, the energy saving issue condition, the energy saving RAT, and the energy saving analysis domain is an optional attribute of the MDA analysis report control IOC. When the analysis type is another value other than skill analysis, the MDA analysis report control IOC may include none of the report method, the analysis area, the energy saving target, the energy saving issue condition, the energy saving concerned KPI impact, the analysis period, the report period, the energy saving RAT, and the energy saving analysis domain.

Table 3 shows a definition of the MDA analysis report control IOC in the sub-solution 2.

**Table 3**

| Attribute name | Support qualifier | Readable | Writable | Invariant | Notifiable |
|---|---|---|---|---|---|
| Analysis type | M | T | T | F | T |
| Report method | M | T | T | F | T |
| Analysis period | O | T | T | F | T |
| Report period | O | T | T | F | T |

| Energy saving concerned KPI impact | | | | | |
|---|---|---|---|---|---|
| >KPI name | CM | T | T | F | T |
| >Acceptable decreasing range | CO | T | T | F | T |
| >Scenario identifier | CO | T | T | F | T |

| Energy saving target | | | | | |
|---|---|---|---|---|---|
| >Energy saving target name | CM | T | T | F | T |
| >Weight | CO | T | T | F | T |
| Energy saving issue condition | CO | T | T | F | T |
| Energy saving analysis area | CO | T | T | F | T |
| Energy saving RAT | CO | T | T | F | T |
| Energy saving analysis domain | CO | T | T | F | T |

According to the sub-solution 2, when constructing the energy saving analysis request shown in this application, the MDAS consumer may use the energy saving analysis request to carry an attribute name shown in the MDA analysis report control IOC and a value corresponding to the attribute name, to implement the energy saving analysis request provided in this embodiment of this application.

### Sub-solution 3

In the sub-solution 3, the MDA analysis report control IOC is used as a parent class, and includes any item of the report method, the analysis period, and the report period. In addition, an energy saving analysis control IOC (denoted as <<IOC>>EnergySavingAnalysisControl) is defined for the MDA assisted energy saving analysis scenario. The energy saving analysis control IOC is used as a child class of the MDA analysis report control IOC. The energy saving analysis control IOC may include at least one of the analysis area, the energy saving target, the energy saving issue condition, the energy saving concerned KPI impact, the energy saving RAT, or the energy saving analysis domain.

Optionally, a definition of the MDA analysis report control IOC is shown in Table 4, and a definition of the energy saving analysis control IOC is shown in Table 5.

**Table 4**

| Attribute name | Support qualifier | Readable | Writable | Invariant | Notifiable |
|---|---|---|---|---|---|
| Report method | M | T | T | F | T |
| Analysis period | O | T | T | F | T |
| Report period | O | T | T | F | T |

**Table 5**

| Attribute name | Support qualifier | Readable | Writable | Invariant | Notifiable |
|---|---|---|---|---|---|
| Energy saving concerned KPI impact | | | | | |
| >KPI name | M | T | T | F | T |
| >Acceptable decreasing range | O | T | T | F | T |
| >Scenario identifier | O | T | T | F | T |

| Energy saving target | | | | | |
|---|---|---|---|---|---|
| >Energy saving target name | M | T | T | F | T |
| >Weight | O | T | T | F | T |
| Energy saving issue condition | O | T | T | F | T |
| Energy saving analysis area | O | T | T | F | T |
| Energy saving RAT | O | T | T | F | T |
| Energy saving analysis domain | O | T | T | F | T |

As shown in FIG. 8, the MDA analysis report control IOC and the energy saving analysis control IOC are in an inheritance relationship. In FIG. 8, a connection line including a hollow triangle arrow indicates an inheritance relationship between two IOCs, that is, a relationship between a parent class and a child class. All attributes of the parent class IOC may be used as attributes of the child class IOC. The IOC to which the hollow triangle arrow points is a parent class, and another IOC is a child class. Therefore, FIG. 8 shows that the energy saving analysis control IOC is inherited from the MDA analysis report control IOC class, that is, the MDA analysis report control IOC is used as a parent class, the energy saving analysis control IOC is used as a child class, and the energy saving analysis control IOC inherits all attributes of the MDA analysis report control IOC.

According to the sub-solution 3, when constructing the energy saving analysis request shown in this application, the MDAS consumer may use the energy saving analysis request to carry an attribute name shown in the MDA analysis report control IOC and a value corresponding to the attribute name, and carry an attribute name shown in the energy saving analysis control IOC and a value corresponding to the attribute name.

### Sub-solution 4

The MDA analysis report control IOC may include any item of the analysis type, the report method, the analysis period, and the report period. In addition, an energy saving analysis control IOC is defined for the MDA assisted energy saving analysis scenario, and is denoted as an energy saving analysis control IOC. The energy saving analysis control IOC may include at least one of the analysis area, the energy saving target, the energy saving issue condition, the energy saving concerned KPI impact, the energy saving RAT, or the energy saving analysis domain. The MDA analysis report control IOC and the energy saving analysis control IOC are in an association relationship. The MDA analysis report control IOC may further include information indicating the association relationship, for example, include information about the energy saving analysis control IOC, where the information about the energy saving analysis control IOC may be an identifier name (distinguished name, DN) of an energy saving analysis control IOC instance.

Optionally, a definition of the MDA analysis report control IOC is shown in Table 6, and a definition of the energy saving analysis control IOC is shown in Table 7.

**Table 6**

| Attribute name | Support qualifier | Readable | Writable | Invariant | Notifiable |
|---|---|---|---|---|---|
| Analysis type | M | T | T | F | T |
| Report method | M | T | T | F | T |
| Analysis period | O | T | T | F | T |
| Report period | O | T | T | F | T |
| Attribute associated object (attribute related to role) | | | | | |
| Information about an energy saving analysis control IOC | CM | T | T | F | T |

**Table 7**

| Attribute name | Support qualifier | Readable | Writable | Invariant | Notifiable |
|---|---|---|---|---|---|
| Energy saving concerned KPI impact | | | | | |
| >KPI name | M | T | T | F | T |
| >Acceptable decreasing range | O | T | T | F | T |
| >Scenario identifier | O | T | T | F | T |

| Energy saving target | | | | | |
|---|---|---|---|---|---|
| >Energy saving target name | M | T | T | F | T |
| >Weight | O | T | T | F | T |
| Energy saving issue condition | O | T | T | F | T |
| Energy saving analysis area | O | T | T | F | T |
| Energy saving RAT | O | T | T | F | T |
| Energy saving analysis domain | O | T | T | F | T |

As shown in FIG. 9, the MDA analysis report control IOC and the energy saving analysis control IOC are in an association relationship. In FIG. 9, a connection line including an open arrow indicates that two IOCs are in an association relationship. The association is an ownership, and enables one IOC to know an attribute of the other IOC. An IOC to which an arrow points is an attribute owned party, and the other IOC can learn of all attributes of the owned party IOC. Therefore, in FIG. 9, the MDA analysis report control IOC is an owner, the energy saving analysis control IOC is an owned party, and the MDA analysis report control IOC knows all attributes of the energy saving analysis control IOC.

According to the sub-solution 4, when constructing the energy saving analysis request shown in this application, the MDAS consumer may use the energy saving analysis request to carry an attribute name shown in the MDA analysis report control IOC and a value corresponding to the attribute name, and carry an attribute name shown in the energy saving analysis control IOC and a value corresponding to the attribute name.

### Solution 2

An analysis control model is separately defined for each analysis scenario. An energy saving analysis control IOC is defined for an MDA assisted energy saving analysis scenario, and is denoted as an energy saving analysis control IOC.

Optionally, a definition of the energy saving analysis control IOC is shown in Table 8.

**Table 8**

| Attribute name | Support qualifier | Readable | Writable | Invariant | Notifiable |
|---|---|---|---|---|---|
| Report method | M | T | T | F | T |
| Analysis period | O | T | T | F | T |
| Report period | O | T | T | F | T |
| Energy saving concerned KPI impact | | | | | |
| >KPI name | M | T | T | F | T |
| >Acceptable decreasing range | O | T | T | F | T |
| >Scenario identifier | O | T | T | F | T |
| Energy saving target | | | | | |
| >Energy saving target name | M | T | T | F | T |
| >Weight | O | T | T | F | T |
| Energy saving issue condition | O | T | T | F | T |
| Energy saving analysis area | O | T | T | F | T |
| Energy saving RAT | O | T | T | F | T |
| Energy saving analysis domain | O | T | T | F | T |

According to the solution 2, when constructing the energy saving analysis request shown in this application, the MDAS consumer may use the energy saving analysis request to carry an attribute name shown in the energy saving analysis control IOC and a value corresponding to the attribute name.

It should be understood that in this application, the energy saving analysis result shown in this application may be constructed with reference to the manners of constructing the energy saving analysis request shown in the solution 1 and the solution 2. A specific manner is not described again.

Optionally, in this application, the energy saving analysis capability may be constructed by using any one of the following example solution 3 to solution 5.

### Solution 3

A management data analytics function IOC (denoted as <<IOC>>MDAF) is defined. For the MDA assisted energy saving analysis scenario, an energy saving analysis capability data type (denoted as <<Datatype>>EnergySavingAnalysisCapability) is defined. The data type is used as an attribute of the management data analytics function IOC. The energy saving analysis capability of the MDAS producer is used as an attribute of the energy saving analysis capability data type. Specifically, the energy saving analysis capability includes at least one of an energy saving target, a key performance index, a scenario, an energy saving RAT, an energy saving analysis domain, and an energy saving analysis level that are supported by the MDAS producer.

In the solution 3, when the supported analysis type in an energy saving analysis capability notification sent by the MDAS producer to the MDAS consumer includes energy saving analysis, the energy saving analysis capability data type is a mandatory attribute.

Optionally, the management data analytics function IOC is shown in Table 9.

**Table 9**

| Attribute name | Support qualifier | Readable | Writable | Invariant | Notifiable |
|---|---|---|---|---|---|
| MDAF identifier (ID) | M | T | T | F | T |
| Mnf type of the MDAF (MnF type) | M | T | T | F | T |
| Analysis type supported by the MDAF | M | T | T | F | T |
| Energy saving analysis capability | CM | T | T | F | T |

Optionally, the energy saving analysis capability data type is shown in Table 10.

**Table 10**

| Attribute name | Support qualifier | Readable | Writable | Invariant | Notifiable |
|---|---|---|---|---|---|
| Supported energy saving target type | M | T | T | F | T |
| Supported energy saving analysis key performance index | M | T | T | F | T |
| Supported analysis scenario | O | T | T | F | T |
| Supported energy saving analysis level | O | T | T | F | T |
| Supported energy saving RAT | O | T | T | F | T |
| Supported energy saving analysis domain | O | T | T | F | T |

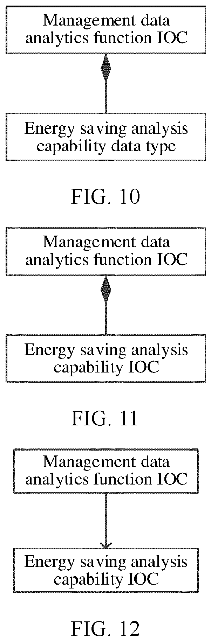

As shown in FIG. 10, the management data analytics function IOC and the energy saving analysis capability data type in the solution 3 are in an inclusion relationship, and for a meaning of a connection line including a solid diamond arrow, refer to descriptions of the meaning of the connection line in FIG. 7. According to FIG. 10, the management data analytics function IOC includes the energy saving analysis capability data type, that is, one management data analytics function IOC is used as a whole and may include zero or one energy saving analysis capability data type.

According to the solution 3, when constructing the energy saving analysis request shown in this application, the MDAS consumer may use the energy saving analysis request to carry an attribute name shown in <IOC>>MDAF and a value corresponding to the attribute name, and carry an attribute name shown in the energy saving analysis capability data type and a value corresponding to the attribute name.

### Solution 4

A management data analytics function IOC is defined, denoted as a management data analytics function IOC. For the MDA assisted energy saving analysis scenario, an energy saving analysis capability IOC is defined, denoted as «IOC»EnergySavingAnalysisCapability.

In the solution 4, the management data analytics function IOC is shown in Table 11.

**Table 11**

| Attribute name | Support qualifier | Readable | Writable | Invariant | Notifiable |
|---|---|---|---|---|---|
| MDAF identifier | M | T | T | F | T |
| Mnf type of the MDAF | M | T | T | F | T |
| Analysis type supported by the MDAF | M | T | T | F | T |

An energy saving analysis capability IOC is shown in Table 12.

**Table 12**

| Attribute name | Support qualifier | Readable | Writable | Invariant | Notifiable |
|---|---|---|---|---|---|
| Supported energy saving target type | M | T | T | F | T |
| Supported energy saving analysis key performance index | M | T | T | F | T |
| Supported analysis scenario | O | T | T | F | T |
| Supported energy saving analysis level | O | T | T | F | T |
| Supported energy saving RAT | O | T | T | F | T |
| Supported energy saving analysis domain | O | T | T | F | T |

As shown in FIG. 11, the management data analytics function IOC and the energy saving analysis capability IOC in the solution 4 are in an inclusion relationship. A connection line including a solid diamond arrow shown in FIG. 11 indicates that two IOCs are in an inclusion relationship. For details, refer to the descriptions of the meaning of the connection line in FIG. 7. FIG. 11 may indicate that the management data analytics function IOC includes the energy saving analysis capability IOC. In addition, one management data analytics function IOC is used as a whole, and may include zero or one energy saving analysis capability IOC.

According to the solution 4, when constructing the energy saving analysis request shown in this application, the MDAS consumer may use the energy saving analysis request to carry an attribute name shown in <IOC>>MDAF and a value corresponding to the attribute name, and carry an attribute name shown in the energy saving analysis capability IOC and a value corresponding to the attribute name.

### Solution 5

A management data analytics function IOC is defined, denoted as a management data analytics function IOC. For the MDA assisted energy saving analysis scenario, an energy saving analysis capability IOC is defined, denoted as «IOC»EnergySavingAnalysisCapability.

In the solution 5, the management data analytics function IOC is shown in Table 13.

**Table 13**

| Attribute name | Support qualifier | Readable | Writable | Invariant | Notifiable |
|---|---|---|---|---|---|
| MDAF identifier | M | T | T | F | T |
| Mnf type of the MDAF | M | T | T | F | T |
| Analysis type supported by the MDAF | M | T | T | F | T |
| Attribute associated object | | | | | |
| Information about an energy saving analysis capability IOC | CM | T | T | F | T |

An energy saving analysis capability IOC is shown in Table 14.

**Table 14**

| Attribute name | Support qualifier | Readable | Writable | Invariant | Notifiable |
|---|---|---|---|---|---|
| Supported energy saving target type | M | T | T | F | T |
| Supported energy saving analysis key performance index | M | T | T | F | T |
| Supported analysis scenario | O | T | T | F | T |
| Supported energy saving analysis level | O | T | T | F | T |
| Supported energy saving RAT | O | T | T | F | T |
| Supported energy saving analysis domain | O | T | T | F | T |

As shown in FIG. 12, the management data analytics function IOC and the energy saving analysis capability IOC in the solution 5 are in an inclusion relationship. A line with an open arrow in FIG. 12 indicates that two IOCs are in an association relationship. For details, refer to the description of the connection line in FIG. 9 in this application. FIG. 12 indicates that the management data analytics function IOC is an owner, the energy saving analysis capability IOC is an owned party, and the management data analytics function IOC knows all attributes of the energy saving analysis capability IOC.

According to the solution 5, when constructing the energy saving analysis request shown in this application, the MDAS consumer may use the energy saving analysis request to carry an attribute name shown in <IOC>>MDAF and a value corresponding to the attribute name, and carry an attribute name shown in the energy saving analysis capability IOC and a value corresponding to the attribute name.

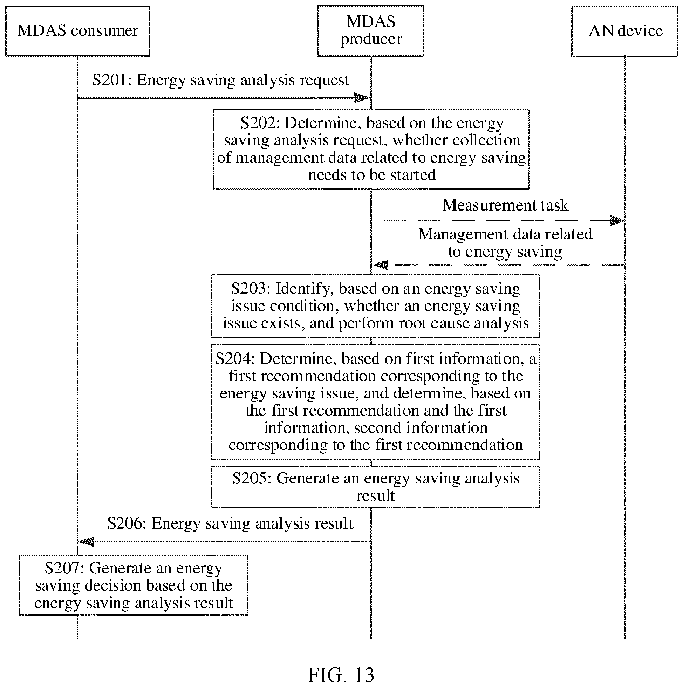

The foregoing describes, with reference to FIG. 1 to FIG. 12, the energy saving analysis method provided in embodiments of this application. The following describes, with reference to FIG. 13 to FIG. 16, an example of a procedure of the energy saving analysis method provided in embodiments of this application.

The following describes an implementation procedure in embodiments of this application by using an example in which the first device is an MDAS producer and the second device is an MDAS consumer. In this implementation, the MDAS producer determines an energy saving analysis result based on an energy saving analysis request from the MDAS consumer, and the energy saving analysis request includes first information. The energy saving analysis result includes a first recommendation, and optionally, may further include second information. This embodiment may include the following steps shown in FIG. 13.

S201: The MDAS consumer sends an energy saving analysis request to the MDAS producer, where the energy saving analysis request may include at least one of an analysis type, a report method, an energy saving analysis area, an energy saving target, an energy saving issue condition, energy saving concerned KPI impact, an analysis period, a report period, an energy saving RAT, or an energy saving analysis domain.

It should be understood that, for implementation of S201, refer to implementation of S1 shown in 5. A difference between S201 and S1 lies in that the energy saving analysis request in S201 further includes at least one of the energy saving analysis area, the energy saving target, the energy saving issue condition, the energy saving concerned KPI impact, the analysis period, the report period, the energy saving RAT, or the energy saving analysis domain, but the energy saving analysis request in S1 does not include the foregoing content.

Optionally, the MDAS consumer may construct an energy saving analysis capability according to the implementation shown in either of the solution 1 and the solution 2.

S202: The MDAS producer determines, based on the energy saving analysis request, whether collection of management data related to energy saving needs to be started.

In S202, the MDAS may determine, based on the analysis type in the energy saving analysis request, whether collection of management data related to energy saving needs to be started. For a determining manner, refer to the description in S2 shown in FIG. 5. Details are not described herein again.

Optionally, if the MDAS producer determines that collection of management data related to energy saving needs to be started, the MDAS producer may send a measurement task for the management data related to energy saving to an AN device, to obtain the management data related to energy saving.

The management data related to energy saving includes but is not limited to power, energy, and environment measurement values of the AN device, a PDCP data volume, PRB utilization, an RRC connection quantity, or a UE throughput.

Optionally, in actual application, the MDAS producer may alternatively send a measurement task for the management data related to energy saving to a core network device or another network device. This is not specifically limited in this application.

S203: The MDAS producer identifies, based on the energy saving issue condition, whether an energy saving issue exists, and performs root cause analysis for the energy saving issue. The energy saving issue includes that energy consumption is excessively high, energy efficiency is excessively low, there is energy consumption reduction room, or there is energy efficiency improvement room. A root cause of the energy saving issue is as follows: For example, a root cause of excessively high energy consumption may be that a cell with extremely low load does not enter an energy saving state.

A difference from S3 shown in FIG. 5 lies in that in S203, the MDAS producer may determine, based on the energy saving issue condition included by the MDAS consumer in the energy saving analysis request, whether the energy saving issue exists. Specifically, the energy saving issue condition may indicate, for example, that when energy consumption is higher than a specified threshold, it may be determined that an energy saving issue of excessively high energy consumption exists. If the first device determines that energy consumption is higher than the specified threshold, it is determined that an energy saving issue of excessively high energy consumption exists. The energy saving issue condition may alternatively indicate that when energy efficiency is lower than a specified threshold, it may be determined that an energy saving issue of excessively low energy efficiency exists. If the first device determines that energy efficiency is lower than the specified threshold, it may be determined that an energy saving issue of excessively low energy efficiency exists. The energy saving issue condition may alternatively indicate that when a value by which energy consumption can decrease exceeds a specified threshold, it may be determined that there is room for reducing energy consumption. If the value by which energy consumption can decrease for the first device exceeds the specified threshold, it may be determined that an energy saving issue that there is room for reducing energy consumption exists. The energy saving issue condition may alternatively indicate that when a value by which energy efficiency can increase exceeds a specified threshold, it may be determined that there is room for improving energy efficiency. If the first device determines that the value by which the energy efficiency can increase exceeds the specified threshold, it may be determined that an energy efficiency issue that there is room for improving energy efficiency exists.

For example, if the energy saving issue condition is "when energy consumption is greater than 50 bit/J, it is determined that the energy saving issue is excessively high energy consumption", and the MDAS producer determines that an actually measured network energy consumption value is 60 bit/J, the MDAS producer determines that an issue of excessively high energy consumption exists. If the energy saving issue condition is "when a value by which energy consumption can decrease is greater than 5 bit/J, it is determined that the energy saving issue is that there is room for reducing energy consumption", and the MDAS producer determines that energy consumption of a cell can be reduced by 10 bit/J after an energy saving state of the cell is enabled, the MDAS producer may determine that an issue that there is room for reducing energy consumption exists.

S204: The MDAS producer determines, based on the first information, a first recommendation corresponding to the energy saving issue, and determines, based on the first recommendation and the first information, second information corresponding to the first recommendation, where the first recommendation and the second information may be referred to as an energy saving analysis result.

For a manner in which the MDAS producer determines, based on the first information, the first recommendation corresponding to the energy saving issue, refer to the description in S 102. For example, if the first information is an energy saving target, the first recommendation is a recommendation that can implement the energy saving target. For another example, if the first information further includes KPI impact, the first device may further evaluate, based on the first recommendation, a KPI change range corresponding to the first recommendation, to ensure that a KPI decreasing value caused by an energy saving measure does not exceed an acceptable KPI decreasing range indicated by the KPI impact.

For example, in step S203, the MDAS producer determines that the energy saving issue is excessively high energy consumption, and the root cause of the excessively high energy consumption is that a cell with extremely low load does not enter an energy saving state. In this case, the first recommendation may include: enabling the energy saving state of the cell with extremely low load.

Optionally, the first device may alternatively determine the first recommendation based on the first information and third information. For example, the third information indicates at least one of an energy saving analysis area, an energy saving analysis period, an energy saving analysis result report period, an energy saving RAT, and an energy saving analysis domain. For a manner of determining the first recommendation based on the first information and the third information, refer to the description in S 102.

In addition, for a manner in which the MDAS producer determines, based on the first recommendation and the first information, the second information corresponding to the first recommendation, refer to the foregoing description of S102. The second information includes at least one of energy saving effect prediction information and a KPI change range. For example, after determining the first recommendation based on the first information, the first device predicts energy saving effect of the first recommendation, to obtain the energy saving effect prediction information. The first device may further evaluate the KPI change range corresponding to the first recommendation.

S205: The MDAS producer generates an energy saving analysis result. The energy saving analysis result may include the first recommendation and the second information corresponding to the first recommendation, and the first recommendation and the second information may be referred to as the energy saving analysis result.

Specifically, after determining the first recommendation corresponding to the energy saving issue and the second information corresponding to the first recommendation, the MDAS producer includes the first recommendation and the second information in the energy saving analysis result.

Optionally, the energy saving analysis result may further include at least one of a geographical area location in which an energy consumption issue exists, a root cause of the energy consumption issue, a load trend prediction result, a cell recommended to enter an energy saving state, a time period that allows to enter the energy saving state, a target cell recommended to transfer load of a cell in the energy saving state, and a scenario identifier. For details, refer to the foregoing description of the energy saving analysis result.

S206: The MDAS producer sends the energy saving analysis result to the MDAS consumer, where the energy saving analysis result includes the first recommendation and the second information. Optionally, the energy saving analysis result may further include at least one of a geographical area location in which an energy saving issue exists, a root cause of the energy saving issue, a load trend prediction result, a cell recommended to enter an energy saving state, a time period that allows to enter the energy saving state, and a target cell recommended to transfer load of a cell in the energy saving state.

S207: The MDAS consumer generates an energy saving decision based on the energy saving analysis result.

The energy saving decision may indicate execution of a corresponding energy saving measure. Optionally, the MDAS consumer may generate the energy saving decision based on the energy saving analysis result in the manner described in S5 shown in FIG. 5.

If the energy saving analysis result includes the scenario identifier, the MDAS consumer may learn a scenario to which the energy saving analysis result is applicable, so that the MDAS consumer determines, based on the applicable scenario of the network, whether to generate the energy saving decision based on the energy saving analysis result. For example, if the MDAS consumer finds that the scenario identifier is inconsistent with a scenario of a current network, the MDAS consumer may abandon generation or execution of the energy saving decision. If the energy saving analysis result includes the energy saving effect prediction information and/or the key performance index change range, effect (including energy saving effect and KPI change effect) achieved after the MDAS consumer performs a corresponding energy saving decision may be predicted, to better assist the second device in determining the energy saving decision. For example, the MDAS consumer obtains a plurality of energy saving analysis results. Energy saving effect prediction information corresponding to energy saving recommendations of different energy saving analysis results is different, or key performance index change ranges corresponding to energy saving recommendations of different energy saving analysis results are different. In this case, the MDAS consumer may select, based on the energy saving effect prediction information and/or the key performance index change range, an energy saving analysis result with better energy saving effect and/or a smaller KPI decreasing value, and then generate and execute an energy saving decision corresponding to the energy saving analysis result.

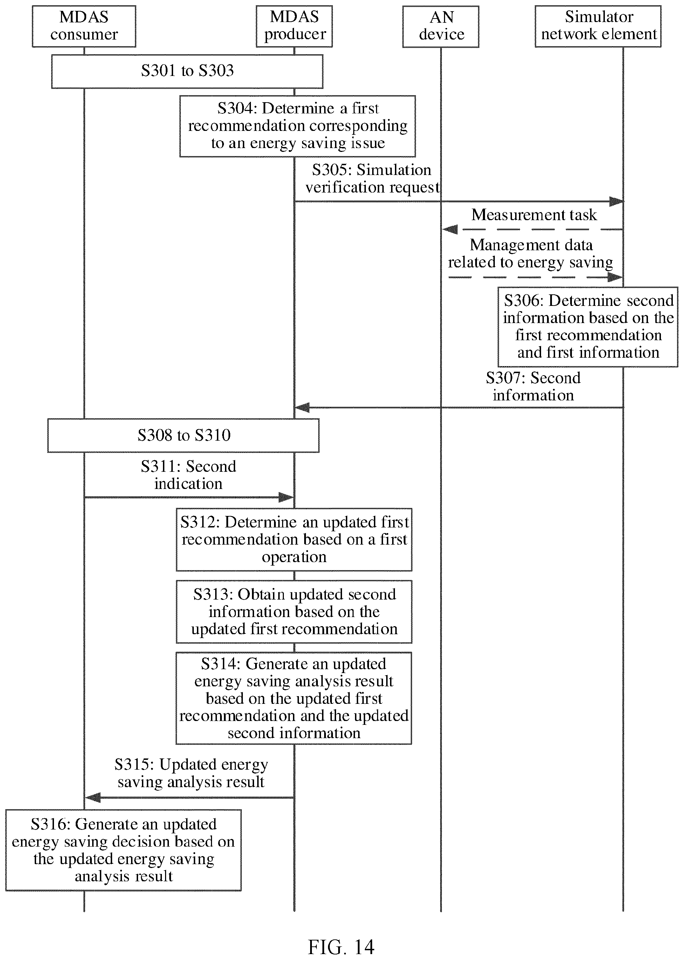

The following describes another implementation procedure in embodiments of this application still by using an example in which the first device is an MDAS producer and the second device is an MDAS consumer. In this implementation, the MDAS producer determines a first recommendation based on an energy saving analysis request from the MDAS consumer, and a simulator network element of the MDAS producer determines second information. The energy saving analysis request may include the first information. In this example, the energy saving analysis result sent by the MDAS producer to the MDAS consumer includes the first recommendation, and optionally, may further include the second information. This embodiment may include the following steps shown in FIG. 14.

S301 to S303 are similar to S201 to S203, and details are not described again.

S304: The MDAS producer determines a first recommendation corresponding to an energy saving issue.

Specifically, the MDAS producer may determine the first recommendation based on at least one of an analysis type, a report method, an energy saving analysis area, an energy saving target, an energy saving issue condition, energy saving concerned KPI impact, an analysis period, a report period, an energy saving RAT, or an energy saving analysis domain included in the energy saving analysis request. For a determining manner of the first recommendation, refer to the description in this application. Details are not described herein again. For example, if the first information is an energy saving target, the first recommendation is a recommendation that can implement the energy saving target. For another example, if the first information further includes KPI impact, the first device may further evaluate, based on the first recommendation, a KPI change range corresponding to the first recommendation, to ensure that a KPI decreasing value caused by an energy saving measure does not exceed an acceptable KPI decreasing range indicated by the KPI impact. In addition, the first device may alternatively determine the first recommendation based on the first information and third information. A specific manner is similar to the manner of determining the first recommendation based on the first information and the third information described in S102.

S305: The MDAS producer sends a simulation verification request to the simulator network element, where the simulation verification request carries the first recommendation and the first information. The first information includes the energy saving target, and optionally, further includes the energy saving concerned KPI impact. The energy saving concerned KPI impact includes, for example, a KPI name, or a KPI name and an acceptable decreasing range.

S306: The simulator network element determines the second information based on the first recommendation and the first information, where the second information includes at least one of energy saving effect prediction information and a KPI change range. In implementation of S306, the simulator network element may predict energy saving effect and a KPI change range that are corresponding to the first recommendation. The KPI change range represents a KPI decreasing value predicted by the MDAS producer according to the first recommendation, and the energy saving effect prediction information represents an energy consumption and/or energy efficiency change value predicted by the MDAS producer according to the first recommendation.

For a manner in which the simulator network element determines, based on the first recommendation and the first information, the second information corresponding to the first recommendation, refer to the foregoing description in S102. The second information includes at least one of energy saving effect prediction information and a KPI change range. For example, after determining the first recommendation based on the first information, the first device predicts energy saving effect of the first recommendation, to obtain the energy saving effect prediction information. The first device may further evaluate the KPI change range corresponding to the first recommendation.

Optionally, the simulator network element requests management data related to energy saving from the AN device based on the simulation verification request, to perform simulation. The management data related to energy saving includes but is not limited to power, energy, and environment measurement values of the AN device, a PDCP data volume, PRB utilization, an RRC connection quantity, or a UE throughput.

Optionally, in actual application, the simulator network element may alternatively send a measurement task for the management data related to energy saving to a core network device or another network device. This is not specifically limited in this application.

S307: The simulator network element sends the second information to the MDAS producer.

S308 to S310 are similar to S205 to S207.

Optionally, the procedure shown in FIG. 14 may further include the following steps.

S311: The MDAS consumer sends a second indication to the MDAS producer, where the second indication indicates a first operation performed by the MDAS consumer based on the energy saving analysis result.

The first operation may be an operation performed by the MDAS consumer based on the energy saving decision after the MDAS consumer generates the energy saving decision based on the energy saving analysis result.

S312: The MDAS consumer determines an updated first recommendation based on the first operation.

For a manner in which the MDAS consumer updates the first recommendation based on the first operation, refer to the description of the manner in which the first device updates the first recommendation in S 102. For example, after the MDAS consumer performs the first operation, the energy-saving-related management data collected by the MDAS producer from the AN device or another network element changes. In this case, after receiving the second indication, the MDAS producer may collect the changed energy-saving-related management data, and further determine the updated first recommendation based on the changed energy-saving-related management data.

S313: The MDAS consumer obtains updated second information based on the updated first recommendation.

Specifically, refer to the description of the manner of updating the second information by the first device in S102. The MDAS producer may determine the updated second information according to the first information and the updated first recommendation, or the MDAS producer may send the updated first recommendation and the first information to the simulator network element, and the simulator network element determines the updated second information according to the updated first recommendation and the first information.

S314: The MDAS producer generates an updated energy saving analysis result according to the updated first recommendation and the updated second information.

The updated energy saving analysis result may include the updated first recommendation and the updated second information.

S315: The MDAS producer sends the updated energy saving analysis result to the MDAS consumer.

S316: The MDAS consumer generates an updated energy saving decision based on the updated energy saving analysis result.

For a manner in which the MDAS consumer generates the updated energy saving decision based on the updated energy saving analysis result, refer to the description in S5 that the MDAS consumer generates the energy saving decision based on the energy saving analysis result. Details are not described again.

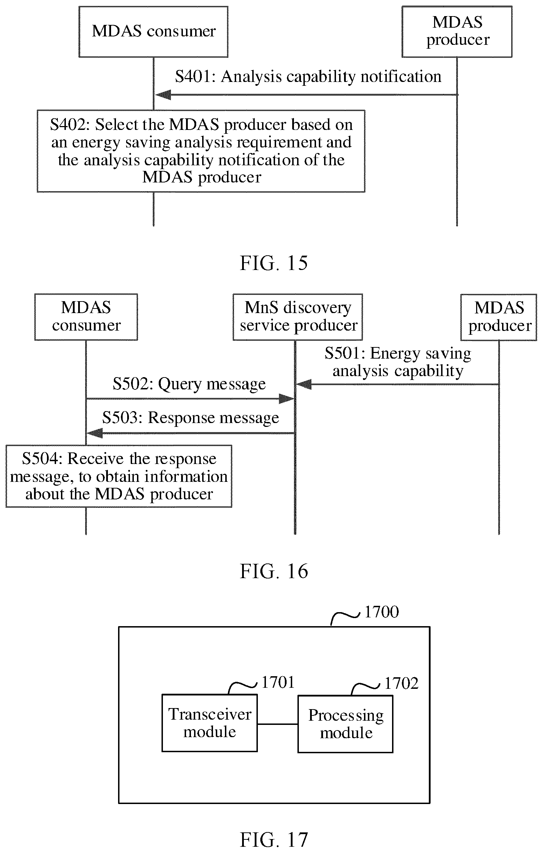

Based on the example shown in FIG. 13 or FIG. 14, an analysis capability supported by the MDAS producer may be indicated to the MDAS consumer by using a procedure shown in FIG. 15, so that the MDAS consumer may select an appropriate MDAS producer according to a requirement of the MDAS consumer to implement energy saving analysis. As shown in FIG. 15, the procedure may include the following steps.

S401: The MDAS producer sends an analysis capability notification to the MDAS consumer.

The analysis capability notification contains an analysis type supported by the MDAS producer and an energy saving analysis capability of the MDAS producer. The energy saving analysis capability information of the MDAS producer includes at least one of an energy saving target type supported by the MDAS producer, supported energy saving analysis, a supported analysis scenario, a supported energy saving analysis level, a supported energy saving RAT, and a supported energy saving analysis domain.

Optionally, the MDAS producer may construct an energy saving analysis capability according to any one of the solution 3 and the solution 5.

S402: The MDAS consumer selects the MDAS producer based on the energy saving analysis requirement and the analysis capability notification of the MDAS producer.

There may be a plurality of MDAS producers known to the MDAS consumer. The MDAS consumer needs to select an appropriate MDAS producer according to an energy saving analysis requirement of the MDAS consumer, and request an analysis service from the selected MDAS producer. For example, the requirement of the MDAS consumer includes an energy saving analysis requirement, that is, the MDAS consumer needs to perform energy saving analysis. In this case, the MDAS consumer may select, based on the analysis capability of the MDAS producer, an MDAS producer that supports energy saving analysis.

For example, the MDAS consumer may perform S201 or S301 after S402, that is, send the energy saving analysis request to the MDAS producer.

Similar to the procedure shown in FIG. 15, to enable the MDAS consumer to select an appropriate MDAS producer for energy saving analysis, in actual application, one or more MDAS producers may be further managed through a fourth device. The management herein includes but is not limited to: collecting an analysis capability of each MDAS producer, selecting an appropriate MDAS producer according to an analysis requirement of the MDAS consumer, and indicating information about the selected MDAS producer to the MDAS consumer. Optionally, the fourth device may be an MnS discovery service producer (MnS discovery service producer) or another device. This is not specifically limited. The MnS discovery service producer is a producer configured to provide an MnS discovery service. The MnS discovery service producer may be configured to provide information about an MDAS producer for an MnS discovery service consumer, so that the consumer sends an energy saving analysis request to the MDAS producer. In FIG. 10, an example in which the fourth device is an MnS discovery service producer is used for description. It should be understood that in this example, an MnS discovery service consumer may be the same as or different from an MDAS consumer. As shown in FIG. 16, the procedure may include the following steps.

S501: The MDAS producer sends an energy saving analysis capability of the MDAS producer to the MnS discovery service producer.

The MDAS producer may register respective analysis capability information with the MnS discovery service producer, and the analysis capability information may include at least one of an MnS type (MnS Type), an analysis type supported by the MDAS producer, and an energy saving analysis capability. The MnS type includes MDAS. The analysis type supported by the MDAS producer includes energy saving analysis.

Optionally, the MDAS producer may construct an energy saving analysis capability according to any one of the solution 3 and the solution 5.

S502: The MDAS consumer sends a query message to the MnS discovery service producer, where the query message is used to query an MDAS producer that can provide an energy saving analysis capability.

For example, the MnS type in the query message includes the MDAS, and the analysis type supported by the MDAS producer includes the energy saving analysis. Therefore, the MnS discovery service producer may select an MDAS producer supporting the energy saving analysis to provide the energy saving analysis service for the MDAS consumer.

Atime sequence of performing S502 is not specifically limited in this application. S502 may be performed before S501, or may be performed after S502.

S503: The MnS discovery service producer sends a response message for the query message to the MDAS consumer. The response message may carry information about an MDAS producer that meets a condition.

The MnS discovery service producer may search for the MDAS producer based on the MnS type and/or the analysis type supported by the MDAS producer that are/is carried in the query message. Specifically, if the MnS type of the MDAS producer required in the query message includes the MDAS, and the analysis type supported by the MDAS producer in the query message includes the energy saving analysis, the MnS discovery service producer needs to search for an MDAS producer whose MnS type includes the MDAS and whose analysis type supported by the MDAS producer includes the energy saving analysis, and includes information about the MDAS producer in the response message.

Optionally, the information about the MDAS producer includes an identifier of the MDAS producer and an energy saving analysis capability of the MDAS producer.

S504: The MDAS consumer receives the response message, and obtains information about the MDAS producer.

For example, the MDAS consumer may perform S201 or S301 after S504.

In the process shown in FIG. 13 to FIG. 16, the actions of the MDAS producer may be implemented by an MDAF with an energy saving analysis capability.

Based on the foregoing method embodiments, an embodiment of this application further provides a communication apparatus for network energy saving. A structure of the apparatus is shown in FIG. 17, and includes a transceiver module 1701 and a processing module 1702. The transceiver module 1701 may include a receiving module and/or a sending module, and implement information receiving and/or sending. The processing module 1702 may be configured to generate information sent by the transceiver module 1701, or process information received by the transceiver module 1701. The processing module 1702 may also be configured to perform an action other than receiving and sending in the foregoing method embodiments. The apparatus 1700 may be used in a first device, a second device, a third device, or a fourth device. The first device, the second device, the third device, or the fourth device is applicable to the communication systems shown in FIG. 1 to FIG. 4, and may implement the energy saving analysis methods in the foregoing figures.

When the apparatus 1700 is used in the first device, the transceiver module 1701 may be configured to receive first information from a second device, where the first information includes an energy saving target of a network, and the energy saving target includes at least one of energy consumption reduction and energy efficiency improvement; and the transceiver module 1701 may be further configured to send an energy saving analysis result corresponding to the energy saving target to the second device.

In a possible design, the first information further includes key performance index impact of the network, and the key performance index impact indicates an acceptable key index decreasing range.

In a possible design, the energy saving analysis result includes a first recommendation for an energy saving issue of the network and second information corresponding to the first recommendation, the second information includes at least one of energy saving effect prediction information and a key performance index change range, and the processing module 1702 is configured to: determine the first recommendation based on the energy saving target and the key performance index impact; and determine the second information based on the first recommendation, the energy saving target, and the key performance index impact.

In a possible design, the transceiver module 1701 may be further configured to receive third information from the second device, where the third information indicates at least one of an energy saving analysis area, an energy saving analysis period, an energy saving analysis result report period, an energy saving RAT, and an energy saving analysis domain; and the processing module 1702 may be specifically configured to determine the first recommendation based on the energy saving target, the key performance index impact, and the third information.

In a possible design, the transceiver module 1701 may be further configured to send the first recommendation, the energy saving target, and the key performance index impact to a third device, where the first recommendation, the energy saving target, and the key performance index impact are used to determine the second information; and the transceiver module 1701 may be further configured to receive the second information from the third device.

In a possible design, the transceiver module 1701 may be further configured to receive a first indication from the second device, where the first indication indicates that the third device determines the second information.

In a possible design, the processing module 1702 may be further configured to determine updated second information; and the transceiver module 1701 may be further configured to send the updated second information to the second device.

In a possible design, the transceiver module 1701 may be further configured to receive the updated second information from the third device.

In a possible design, the transceiver module 1701 may be further configured to receive a condition determining whether an energy saving issue corresponding to the energy saving target exists; and the processing module 1702 may be further configured to determine, based on the condition, whether the energy saving issue exists.

In a possible design, the transceiver module 1701 may be further configured to send a first configuration to the second device, where the first configuration includes at least one of the following information: an energy saving target supported by the apparatus, where the supported energy saving target includes the energy saving target of the network; a key performance index supported by the apparatus; a scenario supported by the apparatus; an energy saving RAT supported by the apparatus; an energy saving analysis domain supported by the apparatus; or an energy saving analysis level supported by the apparatus.

In a possible design, the transceiver module 1701 may be specifically configured to send the first configuration to the second device through a fourth device, where the first device includes the apparatus.

When the apparatus 1700 is used in a second device, the transceiver module 1701 may include a receiving module and a sending module. The sending module may be configured to send first information to a first device, where the first information includes an energy saving target of a network, and the energy saving target includes at least one of energy consumption reduction and energy efficiency improvement. The receiving module may be configured to receive an energy saving analysis result corresponding to the energy saving target from the first device.

In a possible design, the first information further includes key performance index impact of the network, and the key performance index impact indicates an acceptable key index decreasing range.

In a possible design, the energy saving analysis result includes a first recommendation for an energy saving issue of the network and second information corresponding to the first recommendation, and the second information includes at least one of energy saving effect prediction information and a key performance index change range.

In a possible design, the sending module may be further configured to send third information to the first device, where the third information and the first information are used to determine the first recommendation for the energy saving issue of the network, and the third information indicates at least one of an energy saving analysis area, an energy saving analysis period, an energy saving analysis result report period, an energy saving RAT, and an energy saving analysis domain.

In a possible design, the sending module may be further configured to send a first indication to the first device, where the first indication indicates that a third device determines the second information.

In a possible design, the receiving module may be further configured to receive updated second information from the first device.

In a possible design, the sending module may be further configured to send, to the first device, a condition determining whether an energy saving issue corresponding to the energy saving target exists.

In a possible design, the receiving module may be further configured to receive a first configuration sent by the first device, where the first configuration includes at least one of the following information: an energy saving target supported by the first device, where the supported energy saving target includes the energy saving target of the network; a key performance index supported by the first device; a scenario supported by the first device; an energy saving RAT supported by the first device; an energy saving analysis domain supported by the first device; or an energy saving analysis level supported by the first device.

In a possible design, the sending module may be further configured to send a first request to a fourth device, where the first request is used to request the first configuration; and the transceiver module 1701 may be specifically configured to receive the first configuration through the fourth device.

When the apparatus 1700 is used in a third device, the transceiver module 1701 may be configured to receive at least one of a first recommendation for an energy saving issue of a network, an energy saving target of the network, and key performance index impact of the network from a first device. The processing module 1702 may be configured to determine, based on the first recommendation, the energy saving target, and the key performance index impact, second information corresponding to the first recommendation, where the second information includes at least one of energy saving effect prediction information and a key performance index change range. The third device sends the second information to the first device.

In a possible design, the transceiver module 1701 may be further configured to send updated second information to the first device.

In a possible design, the transceiver module 1701 may be further configured to receive an updated first recommendation from the first device, and the third device may further determine the updated second information based on the updated first recommendation.

In a possible design, the transceiver module 1701 may be further configured to receive a second indication from the first device or the second device, where the second indication indicates a first energy saving operation performed by the second device in response to an energy saving analysis result; and the processing module 1702 may be further configured to determine the updated second information based on the first energy saving operation.

When the apparatus 1700 is used in a fourth device, the transceiver module 1701 may include a receiving module and a sending module. The receiving module may be configured to receive a first configuration from a first device, and the sending module may be configured to send the first configuration to a second device. The first configuration includes at least one of the following information: an energy saving target supported by the first device, where the supported energy saving target includes an energy saving target of a network; a key performance index supported by the first device; a scenario supported by the first device; an energy saving RAT supported by the first device; an energy saving analysis domain supported by the first device; or an energy saving analysis level supported by the first device.

In a possible design, the receiving module may be further configured to receive a first request from the second device, where the first request is used to request the first configuration. The sending module may send the first configuration to the second device based on the first request.

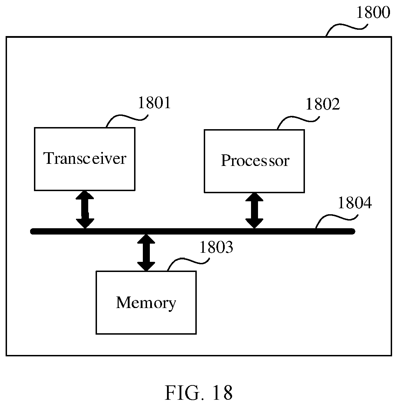

Based on the foregoing embodiments, an embodiment of this application further provides a communication apparatus for network energy saving. The device is configured to implement the communication method for network energy saving in the foregoing figures. As shown in FIG. 18, the communication apparatus 1800 for network energy saving may include at least one of a transceiver 1801, a processor 1802, and a memory 1803. The transceiver 1801, the processor 1802, and the memory 1803 are connected to each other.

Optionally, the transceiver 1801, the processor 1802, and the memory 1803 are connected to each other by using a bus 1804. The bus 1804 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 18, but this does not mean that there is only one bus or only one type of bus.

The transceiver 1801 is configured to receive and send data, to implement communication with another device. For example, the transceiver 1801 may be configured to perform a function of the transceiver module 1701.

Optionally, the transceiver may include a communication interface. The communication interface may be used for communication of the communication apparatus 1800. For example, the communication interface may be configured to implement the function of the transceiver module 1701 in a wired manner.

The processor 1802 is configured to implement the communication method for network energy saving in the foregoing figures. For details, refer to the descriptions in the foregoing embodiments. Details are not described herein again. For example, the processor 1802 may be configured to perform a function of the processing module 1702.

The memory 1803 is configured to store program instructions and the like. Specifically, the program instructions may include program code, and the program code includes computer operation instructions. The memory 1803 may include a random access memory (random access memory, RAM), and may further include a non-volatile memory (non-volatile memory), for example, at least one magnetic disk memory. The processor 1802 executes the program instructions stored in the memory 1803, to implement the foregoing function, so as to implement the communication method for network energy saving provided in the foregoing embodiments.

Based on the foregoing embodiments, an embodiment of this application further provides a communication method for network energy saving. The method is implemented by a first device and a second device. The second device may be configured to send first information to the first device, where the first information includes an energy saving target of a network, and the energy saving target includes at least one of energy consumption reduction and energy efficiency improvement. The first device may be configured to receive the first information from the second device. The first device may be further configured to send an energy saving analysis result corresponding to the energy saving target to the second device. The second device may be further configured to receive the energy saving analysis result from the first device. Optionally, the method may be further performed by a third device. For details, refer to the procedure shown in FIG. 15. Details are not described herein again. Optionally, the method may be further performed by a fourth device. For details, refer to the procedure shown in FIG. 16. Details are not described herein again.

Based on the foregoing embodiments, an embodiment of this application further provides a system. The system may include the foregoing first device and second device. Optionally, the system may further include a third device and/or a fourth device.

Based on the foregoing embodiments, an embodiment of this application further provides a computer program. When the computer program is run on a computer, the computer is enabled to perform the communication method for network energy saving provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the communication method for network energy saving provided in the foregoing embodiments.

Based on the foregoing embodiments, an embodiment of this application further provides a chip. The chip is configured to read a computer program stored in a memory, to implement the communication method for network energy saving provided in the foregoing embodiments.

Based on the foregoing embodiments, an embodiment of this application provides a chip system. The chip system includes a processor, configured to support a computer apparatus in implementing a function of the first device, the second device, the third device, or the fourth device in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method for network energy saving. In the method, the first device may determine the energy saving analysis result of the network based on the energy saving target of the network, so that the energy saving analysis result meets the energy saving target of the network, to improve reliability of the energy saving analysis process and effectiveness of the analysis result.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable storage that can indicate a computer or another programmable data processing device to work in a specific manner, so that the instructions stored in the computer-readable storage generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. Thus, this application is intended to cover these modifications and variations, provided that they fall within the scope of the claims of this application and their equivalent technologies.

## Claims

1. A communication method for network energy saving, comprising:
receiving, by a first device, first information from a second device, wherein the first information comprises an energy saving target of a network, and the energy saving target comprises at least one of energy consumption reduction and energy efficiency improvement; and
sending, by the first device, an energy saving analysis result corresponding to the energy saving target to the second device.

2. The method according to claim 1, wherein the first information further comprises key performance index impact of the network, and the key performance index impact indicates an acceptable key index decreasing range.

3. The method according to claim 2, wherein
the energy saving analysis result comprises a first recommendation for an energy saving issue of the network and second information corresponding to the first recommendation, the second information comprises at least one of energy saving effect prediction information and a key performance index change range, and the first recommendation is an energy saving recommendation corresponding to the energy saving issue; and
the method further comprises:
determining, by the first device, the first recommendation based on the energy saving target and the key performance index impact; and
determining, by the first device, the second information based on the first recommendation, the energy saving target, and the key performance index impact.

4. The method according to claim 3, wherein the method further comprises:
receiving, by the first device, third information from the second device, wherein the third information indicates at least one of an energy saving analysis area, an energy saving analysis period, an energy saving analysis result report period, an energy saving RAT, and an energy saving analysis domain; and
the determining, by the first device, the first recommendation based on the energy saving target and the key performance index impact comprises:
determining, by the first device, the first recommendation based on the energy saving target, the key performance index impact, and the third information.

5. The method according to claim 3 or 4, wherein
the determining, by the first device, the second information based on the first recommendation, the energy saving target, and the key performance index impact comprises:
sending, by the first device, the first recommendation, the energy saving target, and the key performance index impact to a third device, wherein the first recommendation, the energy saving target, and the key performance index impact are used to determine the second information; and
receiving, by the first device, the second information from the third device.

6. The method according to claim 5, wherein the method further comprises:
receiving, by the first device, a first indication from the second device, wherein the first indication indicates that the third device determines the second information.

7. The method according to any one of claims 2 to 6, wherein the method further comprises:
determining, by the first device, updated second information; and
sending, by the first device, the updated second information to the second device.

8. The method according to claim 7, wherein the determining, by the first device, updated second information comprises:
receiving, by the first device, the updated second information from the third device.

9. The method according to any one of claims 1 to 8, wherein the method further comprises:
receiving, by the first device, a condition determining whether an energy saving issue corresponding to the energy saving target exists; and
the method further comprises:
determining, by the first device based on the condition, whether the energy saving issue exists.

10. The method according to any one of claims 1 to 9, wherein the method further comprises:
sending, by the first device, a first configuration to the second device, wherein the first configuration comprises at least one of the following information:
an energy saving target supported by the first device, wherein the supported energy saving target comprises the energy saving target of the network;
a key performance index supported by the first device;
a scenario supported by the first device;
an energy saving RAT supported by the first device;
an energy saving analysis domain supported by the first device; or
an energy saving analysis level supported by the first device.

11. The method according to claim 10, wherein the sending, by the first device, a first configuration to the second device comprises:
sending, by the first device, the first configuration to the second device through a fourth device.

12. A communication method for network energy saving, comprising:
sending, by a second device, first information to a first device, wherein the first information comprises an energy saving target of a network, and the energy saving target comprises at least one of energy consumption reduction and energy efficiency improvement; and
receiving, by the second device, an energy saving analysis result corresponding to the energy saving target from the first device.

13. The method according to claim 12, wherein the first information further comprises key performance index impact of the network, and the key performance index impact indicates an acceptable key index decreasing range.

14. The method according to claim 13, wherein the energy saving analysis result comprises a first recommendation for an energy saving issue of the network and second information corresponding to the first recommendation, the second information comprises at least one of energy saving effect prediction information and a key performance index change range, and the first recommendation is an energy saving recommendation corresponding to the energy saving issue.

15. The method according to claim 14, wherein the method further comprises:
sending, by the second device, third information to the first device, wherein the third information and the first information are used to determine the first recommendation for the energy saving issue of the network, and the third information indicates at least one of an energy saving analysis area, an energy saving analysis period, an energy saving analysis result report period, an energy saving RAT, and an energy saving analysis domain.

16. The method according to claim 14 or 15, wherein the method further comprises:
sending, by the second device, a first indication to the first device, wherein the first indication indicates that a third device determines the second information.

17. The method according to claim 16, wherein the method further comprises:
receiving, by the second device, updated second information from the first device.

18. The method according to any one of claims 12 to 17, further comprising:
sending, by the second device to the first device, a condition determining whether an energy saving issue corresponding to the energy saving target exists.

19. The method according to any one of claims 12 to 17, wherein the method further comprises:
receiving, by the second device, a first configuration sent by the first device, wherein the first configuration comprises at least one of the following information:
an energy saving target supported by the first device, wherein the supported energy saving target comprises the energy saving target of the network;
a key performance index supported by the first device;
a scenario supported by the first device;
an energy saving RAT supported by the first device;
an energy saving analysis domain supported by the first device; or
an energy saving analysis level supported by the first device.

20. The method according to claim 19, wherein the method further comprises:
sending, by the second device, a first request to a fourth device, wherein the first request is used to request the first configuration; and
the receiving, by the second device, a first configuration sent by the first device comprises:
receiving, by the second device, the first configuration through the fourth device.

21. A communication apparatus for network energy saving, comprising a transceiver module and a processing module, wherein
the transceiver module is configured to receive first information from a second device, wherein the first information comprises an energy saving target of a network, and the energy saving target comprises at least one of energy consumption reduction and energy efficiency improvement; and
the transceiver module is further configured to send an energy saving analysis result corresponding to the energy saving target to the second device.

22. The apparatus according to claim 21, wherein the first information further comprises key performance index impact of the network, and the key performance index impact indicates an acceptable key index decreasing range.

23. The apparatus according to claim 22, wherein the energy saving analysis result comprises a first recommendation for an energy saving issue of the network and second information corresponding to the first recommendation, the second information comprises at least one of energy saving effect prediction information and a key performance index change range, and the first recommendation is an energy saving recommendation corresponding to the energy saving issue; and
the processing module is configured to:
determine the first recommendation based on the energy saving target and the key performance index impact; and
determine the second information based on the first recommendation, the energy saving target, and the key performance index impact.

24. The apparatus according to claim 23, wherein the transceiver module is further configured to:
receive third information from the second device, wherein the third information indicates at least one of an energy saving analysis area, an energy saving analysis period, an energy saving analysis result report period, an energy saving RAT, and an energy saving analysis domain; and
the processing module is specifically configured to:
determine the first recommendation based on the energy saving target, the key performance index impact, and the third information.

25. The apparatus according to claim 23 or 24, wherein the transceiver module is further configured to:
send the first recommendation, the energy saving target, and the key performance index impact to a third device, wherein the first recommendation, the energy saving target, and the key performance index impact are used to determine the second information; and
receive the second information from the third device.

26. The apparatus according to claim 25, wherein the transceiver module is further configured to:
receive a first indication from the second device, wherein the first indication indicates that the third device determines the second information.

27. The apparatus according to any one of claims 21 to 26, wherein the processing module is further configured to:
determine updated second information; and
the transceiver module is further configured to:
send the updated second information to the second device.

28. The apparatus according to claim 27, wherein the transceiver module is further configured to:
receive the updated second information from the third device.

29. The apparatus according to any one of claims 21 to 28, wherein the transceiver module is further configured to:
receive a condition determining whether an energy saving issue corresponding to the energy saving target exists; and
the processing module is further configured to:
determine, based on the condition, whether the energy saving issue exists.

30. The apparatus according to any one of claims 21 to 29, wherein the transceiver module is further configured to:
send a first configuration to the second device, wherein the first configuration comprises at least one of the following information:
an energy saving target supported by the apparatus, wherein the supported energy saving target comprises the energy saving target of the network;
a key performance index supported by the apparatus;
a scenario supported by the apparatus;
an energy saving RAT supported by the apparatus;
an energy saving analysis domain supported by the apparatus; or
an energy saving analysis level supported by the apparatus.

31. The apparatus according to claim 30, wherein the transceiver module is specifically configured to:
send the first configuration to the second device through a fourth device, wherein the first device comprises the apparatus.

32. A communication apparatus for network energy saving, comprising a sending module and a receiving module, wherein
the sending module is configured to send first information to a first device, wherein the first information comprises an energy saving target of a network, and the energy saving target comprises at least one of energy consumption reduction and energy efficiency improvement; and
the receiving module is configured to receive an energy saving analysis result corresponding to the energy saving target from the first device.

33. The apparatus according to claim 32, wherein the first information further comprises key performance index impact of the network, and the key performance index impact indicates an acceptable key index decreasing range.

34. The apparatus according to claim 33, wherein the energy saving analysis result comprises a first recommendation for an energy saving issue of the network and second information corresponding to the first recommendation, the second information comprises at least one of energy saving effect prediction information and a key performance index change range, and the first recommendation is an energy saving recommendation corresponding to the energy saving issue.

35. The apparatus according to claim 34, wherein the sending module is further configured to:
send third information to the first device, wherein the third information and the first information are used to determine the first recommendation for the energy saving issue of the network, and the third information indicates at least one of an energy saving analysis area, an energy saving analysis period, an energy saving analysis result report period, an energy saving RAT, and an energy saving analysis domain.

36. The apparatus according to claim 34 or 35, wherein the sending module is further configured to:
send a first indication to the first device, wherein the first indication indicates that a third device determines the second information.

37. The apparatus according to claim 36, wherein the receiving module is further configured to:
receive updated second information from the first device.

38. The apparatus according to any one of claims 32 to 37, wherein the sending module is further configured to:
send, to the first device, a condition determining whether an energy saving issue corresponding to the energy saving target exists.

39. The apparatus according to any one of claims 32 to 38, wherein the receiving module is further configured to:
receive a first configuration sent by the first device, wherein the first configuration comprises at least one of the following information:
an energy saving target supported by the first device, wherein the supported energy saving target comprises the energy saving target of the network;
a key performance index supported by the first device;
a scenario supported by the first device;
an energy saving RAT supported by the first device;
an energy saving analysis domain supported by the first device; or
an energy saving analysis level supported by the first device.

40. The apparatus according to claim 39, wherein the sending module is further configured to:
send a first request to a fourth device, wherein the first request is used to request the first configuration; and
the receiving module is specifically configured to:
receive the first configuration through the fourth device.

41. A communication method for network energy saving, comprising:
receiving, by a simulator network element of a first device, at least one of a first recommendation for an energy saving issue of a network, an energy saving target of the network, and key performance index impact of the network from the first device; and
determining, by the simulator network element based on the first recommendation, the energy saving target, and the key performance index impact, second information corresponding to the first recommendation, wherein the second information comprises at least one of energy saving effect prediction information and a key performance index change range.

42. The method according to claim 41, wherein the method further comprises:
sending, by the simulator network element, the second information to the first device.

43. The method according to claim 41 or 42, wherein the method further comprises:
sending, by the simulator network element, updated second information to the first device.

44. The method according to claim 43, wherein the method further comprises:
receiving, by the simulator network element, an updated first recommendation from the first device; and
determining, by the simulator network element, the updated second information based on the updated first recommendation.

45. The method according to claim 43, wherein the method further comprises:
receiving, by the simulator network element, a second indication from the first device or a second device, wherein the second indication indicates a first energy saving operation performed by the second device in response to the energy saving analysis result; and
determining, by the simulator network element, the updated second information based on the first energy saving operation.

46. A communication method for network energy saving, comprising:
receiving, by a fourth device, a first configuration from a first device; and
sending, by the fourth device, the first configuration to a second device, wherein the second device is configured to manage a network that accepts energy saving analysis, wherein
the first configuration comprises at least one of the following information: an energy saving target supported by the first device, a key performance index supported by the first device, a scenario supported by the first device, an energy saving RAT supported by the first device, an energy saving analysis domain supported by the first device, and an energy saving analysis level supported by the first device; and the energy saving target supported by the first device comprises an energy saving target of the network.

47. The method according to claim 46, wherein the method further comprises:
receiving, by the fourth device, a first request from the second device, wherein the first request is used to request the first configuration.

48. A communication apparatus for network energy saving, comprising:
a communication module, configured to receive at least one of a first recommendation for an energy saving issue of a network, an energy saving target of the network, and key performance index impact of the network from a first device; and
a processing module, configured to determine, based on the first recommendation, the energy saving target, and the key performance index impact, second information corresponding to the first recommendation, wherein the second information comprises at least one of energy saving effect prediction information and a key performance index change range.

49. The apparatus according to claim 48, wherein the communication module is further configured to:
send the second information to the first device.

50. The apparatus according to claim 48 or 49, wherein the communication module is further configured to:
send updated second information to the first device.

51. The apparatus according to claim 50, wherein the communication module is further configured to:
receive an updated first recommendation from the first device; and
the processing module is further configured to:
determine the updated second information based on the updated first recommendation.

52. The apparatus according to claim 50, wherein the communication module is further configured to:
receive a second indication from the first device or a second device, wherein the second indication indicates a first energy saving operation performed by the second device in response to the energy saving analysis result; and
determine, by a simulator network element, the updated second information based on the first energy saving operation.

53. A communication apparatus for network energy saving, comprising:
a receiving module, configured to receive a first configuration from a first device; and
a sending module, configured to send the first configuration to a second device, wherein the second device is configured to manage a network that accepts energy saving analysis, wherein
the first configuration comprises at least one of the following information: an energy saving target supported by the first device, a key performance index supported by the first device, a scenario supported by the first device, an energy saving RAT supported by the first device, an energy saving analysis domain supported by the first device, and an energy saving analysis level supported by the first device; and the energy saving target supported by the first device comprises an energy saving target of the network.

54. The apparatus according to claim 53, wherein the receiving module is further configured to:
receive a first request from the MDAS consumer, wherein the first request is used to request the first configuration.

55. A communication method for network energy saving, comprising:
sending, by a second device, first information to a first device, wherein the first information comprises an energy saving target of a network, and the energy saving target comprises at least one of energy consumption reduction and energy efficiency improvement;
receiving, by the first device, the first information from the second device;
sending, by the first device, an energy saving analysis result corresponding to the energy saving target to the second device; and
receiving, by the second device, the energy saving analysis result from the first device.

56. A communication apparatus for network energy saving, comprising a processor, wherein
the processor is configured to execute a computer program or instructions stored in a memory, and when the computer program or the instructions are executed, the apparatus is enabled to implement the method according to any one of claims 1 to 11, 12 to 20, 41 to 45, or 46 and 47.

57. The communication apparatus according to claim 56, further comprising:
the memory and/or a transceiver, wherein the transceiver is used by the communication apparatus to communicate with another communication apparatus.

58. A computer program product, comprising computer-readable instructions, wherein when a communication apparatus for network energy saving reads and executes the computer-readable instructions, the apparatus is enabled to perform the method according to any one of claims 1 to 11, 12 to 20, 41 to 45, or 46 and 47.

59. A chip, comprising a processor, wherein the processor is coupled to a memory, and is configured to execute a computer program or instructions stored in the memory, and when the processor executes the computer program or the instructions, the method according to any one of claims 1 to 11, 12 to 20, 41 to 45, or 46 and 47 is performed.

60. A system, comprising the apparatus according to any one of claims 21 to 31 and the apparatus according to any one of claims 32 to 40.

61. The system according to claim 60, further comprising the apparatus according to any one of claims 48 to 52, or comprising the apparatus according to claim 53 or 54.

62. A system, comprising a first device configured to implement the method according to any one of claims 1 to 11, and a second device configured to implement the method according to any one of claims 12 to 20.

63. The system according to claim 62, further comprising a third device configured to implement the method according to any one of claims 41 to 45, or a fourth device configured to implement the method according to claim 46 or 47.

64. A computer-readable storage medium, wherein the computer-readable storage medium stores a computer program, and when the computer program is executed by a computer, the computer is enabled to perform the method according to any one of claims 1 to 11, 12 to 20, 41 to 45, or 46 and 47.
